# EUROPEAN PATENT APPLICATION

(11) **EP 4 804 061 A1**
(43) Date of publication of application: **09.09.2026**
(21) Application number: 26163069.3
(22) Date of filing: 06.03.2026
(51) Int. Cl.: G06F 21/41, H04L 9/40, H04L 67/306

(54) **DYNAMIC FEDERATED APPLICATION ACCESS**

(30) Priority: 07.03.2025 IN 202511020779; 30.09.2025 US 202519345275
(71) Applicant: ADP, Inc., Roseland, NJ 07068 (US)
(72) Inventor: YEMPARALA, Sridhar, Roseland, 07068 (US); PATEL, Manish, Roseland, 07068 (US); SAXENA, Abhineet, Roseland, 07068 (US); PENDYALA, Rahul Sai, Roseland, 07068 (US); REDDY, G Shiva Narayana, Roseland, 07068 (US); FINCANNON, Gregory A., Roseland, 07068 (US); PANDRAVADA, Santosh, Roseland, 07068 (US); REDDISHETTY, Vivek, Roseland, 07068 (US); MAHARAJAN, Suthakar, Roseland, 07068 (US)
(74) Representative: Morrall, Jonathan Ian McLachlan

(57) **Abstract**

The technical solutions described herein are directed to improving profile provisioning. A system receives a request to access a target application, the request comprising at least one unique identifier corresponding to a profile. The system determines, responsive to receipt of the request, an absence of an account from a directory based on the at least one unique identifier. The system provides, for display on a first graphical user interface responsive to the absence of the account from the directory, one or more requests for one or more personal identifiers. The system verifies, responsive to receipt of the one or more personal identifiers via the first graphical user interface, that the one or more personal identifiers correspond to the profile. The system generates, responsive to verification of the one or more personal identifiers, the account. The system causes, responsive to generation of the account, the target application to execute.

## Description

### CROSS-REFERENCES TO RELATED APPLICATIONS

This application claims the benefit of priority under 35 U.S.C. § 119 to Indian Provisional Patent Application No. 202511020779, filed March 7, 2025, which is hereby incorporated by reference herein in its entirety.

### TECHNICAL FIELD

The technical solutions described herein are directed to computing technology and, in particular, to improving automatic user provisioning for federated single sign-on (SSO).

### BACKGROUND

Entities can use federated SSO to provide access to multiple computing system domains with one set of login credentials. However, computing systems managing federated SSO for multiple entities can experience performance issues, increased latency, and login session handling interruptions because entities use different authentication methods.

### SUMMARY

Aspects of the technical solutions described herein are directed to dynamic federated application access. Single sign-on (SSO) can refer to an authentication method that enables a client device to access multiple applications or systems using a single set of login credentials.

SSO can be federated or non-federated. Non-federated SSO can include a user accessing a single domain with one set of login credentials corresponding to an identity provider. Federated SSO can include a user using one set of login credentials corresponding to an identity provider to access multiple domains. In some aspects, it is possible to automate profile provisioning for SSO (e.g., federated SSO and non-federated SSO). For example, it is possible to generate an account during a first-time sign-on.

Aspects of the technical solutions described herein are directed to dynamic federated application access. For example, a data processing system of the technical solutions described herein can facilitate providing automatic account provisioning for federated SSO. It can be technically challenging to provide automatic account provisioning for federated SSO in an efficient, reliable, and timely manner without introducing errors, latency, or excessive computing utilization. For example, service providers that generate federated accounts for multiple users (e.g., employees at different companies) can receive multiple unique identifiers (e.g., employee identification numbers) from corresponding identity providers, where the unique identifiers can correspond to multiple users. Aspects of the technical solutions presented herein can mitigate error handling during automated account provisioning for federated SSO by incorporating one or more identity verification methods to verify the identities of the users corresponding to unique identifiers. In another example, unique identifiers (e.g., employee identification numbers) can present security risks when the unique identifiers are exposed to one or more unauthorized parties. Aspects of the technical solutions presented herein can improve security for automated account provisioning by providing one or more identity verification methods to verify the identities of users. Accordingly, the technical solutions presented herein can improve automatic account provisioning for federated SSO.

In some aspects, the technical solutions described herein relate to a system. The system can include one or more processors, coupled with memory, to provision profiles for application execution. The one or more processors can receive, from a client device, a request to access a target application, the request comprising at least one unique identifier corresponding to a profile. The one or more processors can determine, responsive to the request an absence of an account from a directory based on the at least one unique identifier. The one or more processors can request, via the client device, one or more personal identifiers. The one or more processors can verify, responsive to receipt of the one or more personal identifiers via the client device, that the one or more personal identifiers correspond to the profile. The one or more processors can generate, responsive to receipt of the one or more personal identifiers, the account in the directory with a link that maps the at least one unique identifier to the one or more personal identifiers. The one or more processors can cause, responsive to generation of the account in the directory, the target application to execute using the generated account.

In some aspects, the technical solutions described herein relate to a system, wherein the one or more processors verify that the one or more personal identifiers correspond to the profile, wherein the one or more processors further configured to compare the one or more personal identifiers to profile data stored in a profile database.

In some aspects, the technical solutions described herein relate to a system, wherein the one or more processors further receive, via the client device, a subsequent request to access the target application corresponding to the profile, determine a presence of the account in the directory based on the at least one unique identifier, and cause, responsive to the presence of the account in the directory, the target application to execute using the account.

In some aspects, the technical solutions described herein relate to a system, wherein the one or more processors further connect, prior to receipt of the request, to a client computing system. The client computing system can be configured to receive one or more client portal login credentials corresponding to the profile, authenticate, responsive to receipt of the one or more client portal login credentials, the profile, and provide, responsive to authentication of the profile, a client portal.

In some aspects, the technical solutions described herein relate to a system, wherein the one or more processors further connect to a provisioning application programming interface (API), the provisioning API configured to perform one or more backend operations that facilitate generation of the account.

In some aspects, the technical solutions described herein relate to a system, wherein the digital identity computing system, responsive to connection to the digital identity computing system, can be configured to receive one or more login credentials corresponding to the digital identity computing system, verify, responsive to receipt of the one or more personal identifiers, the one or more login credentials by comparing the one or more login credentials to a digital identity computing system database, and provide, responsive to verification of the one or more login credentials, the at least one unique identifier.

In some aspects, the technical solutions described herein relate to a system, wherein the one or more processors further provide, via a client device, a linking confirmation between the at least one unique identifier and the one or more personal identifiers, request, via a client device, one or more profile verification challenge solutions, and transmit, responsive to verification of the profile, a verification signal to the digital identity computing system.

In some aspects, the technical solutions described herein relate to a system, wherein to determine an absence of the account from the directory based on the at least one unique identifier, the one or more processors further determine that the at least one unique identifier is unlinked to the account.

In some aspects, the technical solutions described herein relate to a system, wherein the at least one unique identifier is embedded in a cookie or token.

In some aspects, the technical solutions described herein relate to a system, wherein the account corresponds to a plurality of target applications.

In some aspects, the technical solutions described herein relate to a system, wherein the directory is a Lightweight Directory Access Protocol (LDAP).

In some aspects, the technical solutions described herein relate to a method. The method can include receiving, by one or more processors, a request to access a target application, the request comprising at least one unique identifier corresponding to a profile. The method can include, determining, by the one or more processors responsive to receipt of the request, an absence of an account from a directory based on the at least one unique identifier. The method can include requesting, by the one or more processors via the client device, responsive to determining an absence, one or more personal identifiers. The method can include verifying, by the one or more processors responsive to receiving the one or more personal identifiers via the first graphical user interface, that the one or more personal identifiers correspond to the profile. The method can include generating, by the one or more processors responsive to receiving the one or more personal identifiers, the account in the directory with a link that maps the at least one unique identifier to the one or more personal identifiers. The method can include causing, by the one or more processors responsive to generating the account in the directory, the target application to execute using the generated account.

In some aspects, the technical solutions described herein relate to a method, wherein verifying that the one or more personal identifiers correspond to the profile includes comparing, by the one or more processors, the one or more personal identifiers to profile data stored in a service provider database.

In some aspects, the technical solutions described herein relate to a method, including receiving, by the one or more processors responsive to generating the account, a second request to access the target application, determining, by the one or more processors, a presence of the account in the directory based on the at least one unique identifier, and causing, responsive to the presence of the account in the directory, the target application to execute using the account.

In some aspects, the technical solutions described herein relate to a method, including connecting, by the one or more processors preceding receipt of the request, to a client computing system. The client computing system can be configured to receive one or more client portal login credentials corresponding to the profile, authenticate, responsive to receipt of the one or more client portal login credentials, the profile, and provide, responsive to authentication of the profile, a client portal.

In some aspects, the technical solutions described herein relate to a method, including connecting, by the one or more processors, to a provisioning application programming interface (API), the provisioning API configured to perform one or more backend operations that facilitate generation of the account.

In some aspects, the technical solutions described herein relate to a method, connecting, by the one or more processors preceding receiving the request, to a digital identity computing system configured to facilitate profile authentication.

In some aspects, the technical solutions described herein relate to a method, wherein the digital identity computing system, responsive to connecting to the digital identity computing system, is configured to receive one or more login credentials corresponding to the digital identity computing system, verify, responsive to receipt the one or more personal identifiers, the one or more login credentials by comparing the one or more login credentials to a digital identity computing system database and provide, responsive to verification the one or more login credentials, the at least one unique identifier.

In some aspects, the technical solutions described herein relate to a non-transitory computer-readable media (CRM). The non-transitory CRM can have instructions stored thereon that, when executed by one or more processors, cause the one or more processors to receive, from a client device, a request to access a target application, the request comprising at least one unique identifier corresponding to a profile. The instruction can cause the one or more processors to determine, responsive to the request an absence of an account from a directory based on the at least one unique identifier. The instruction can cause the one or more processors to request, via the client device, responsive to determination of the absence, one or more personal identifiers. The instruction can cause the one or more processors to verify, responsive to receipt of the one or more personal identifiers via the first graphical user interface, that the one or more personal identifiers correspond to the profile. The instruction can cause the one or more processors to generate, responsive to receipt of the one or more personal identifiers, the account in the directory with a link that maps the at least one unique identifier to the one or more personal identifiers. The instruction can cause the one or more processors to cause, responsive to generation of the account in the directory, the target application to execute using the generated account.

These and other aspects and implementations are discussed in detail below. The foregoing information and the following detailed description include illustrative examples of various aspects and implementations and provide an overview or framework for understanding the nature and character of the claimed aspects and implementations. The drawings provide illustrations and a further understanding of the various aspects and implementations and are incorporated in and constitute a part of this specification. The foregoing information and the following detailed description and drawings include illustrative examples and should not be considered as limiting.

### BRIEF DESCRIPTION OF THE FIGURES

Aspects of the present technical solutions described herein are described in the detailed description which follows, in reference to the noted plurality of drawings by way of non-limiting examples of exemplary embodiments of the technical solutions described herein.
FIG. 1 is an illustrative example of a system for dynamic federated application access for dynamic federated application access, in accordance with some implementations;
FIG. 2 is an illustrative example of a method of dynamic federated application access, in accordance with some implementations;
FIG. 3 is an illustrative example of a system for dynamic federated application access, in accordance with some implementations;
FIG. 4 is an illustrative example of a system for dynamic federated application access, in accordance with some implementations;
FIG. 5 is an illustrative example of a system for dynamic federated application access, in accordance with some implementations;
FIG. 6 is an illustrative example of a user interface for providing personal identifiers, in accordance with some implementations;
FIG. 7 is an illustrative example of a user interface for accessing target programs or target applications, in accordance with some implementations;
FIG 8. is an illustrative example of a user interface for accessing target programs or target applications, in accordance with some implementations;
FIG. 9 is an illustrative example of a user interface for confirming a unique identifier, in accordance with some implementations;
FIG. 10 is an illustrative example of a user interface for controlling an authentication protocol, in accordance with some implementations;
FIG. 11 is an illustrative example of a user interface for selecting a verification method, in accordance with some implementations;
FIG. 12 is an illustrative example of a user interface for providing personal identifiers, in accordance with some implementation.

### DETAILED DESCRIPTION

Following below are more detailed descriptions of various concepts related to, and implementations of, systems, methods, or non-transitory computer-readable storage media (CRM) for dynamic federated application access. The various concepts introduced above or discussed in greater detail below can be implemented in any of numerous ways.

Account provisioning for federated SSO can present one or more technical challenges. It can be technically challenging to provide automatic account provisioning for federated SSO in an efficient, reliable, and timely manner without introducing errors, latency, or excessive computing utilization. For example, service providers that generate federated accounts for multiple users (e.g., employees at different companies) can receive multiple unique identifiers (e.g., employee identification numbers) from corresponding identity providers, where the unique identifiers can correspond to multiple users. In another example, unique identifiers (e.g., employee identification numbers) can present security risks when the unique identifiers are exposed to one or more unauthorized parties.

Aspects of the technical solutions described herein are directed to dynamic federated application access, which can also be referred to as instant federated access or zero trust provisioning. For example, a data processing system of the technical solutions described herein can facilitate providing automatic account provisioning for federated SSO. In some aspects, the technical solutions presented herein receive personal data and map the personal data to identifiers. For example, the technical solutions presented herein determine an absence of an account from a directory and generate an account in the directory with a link that maps at least one unique identifier to one or more personal identifiers. Aspects of the technical solutions presented herein can mitigate error handling during automated account provisioning for federated SSO and improve security for automated account provisioning. Accordingly, the technical solutions presented herein can improve automatic account provisioning for federated SSO.

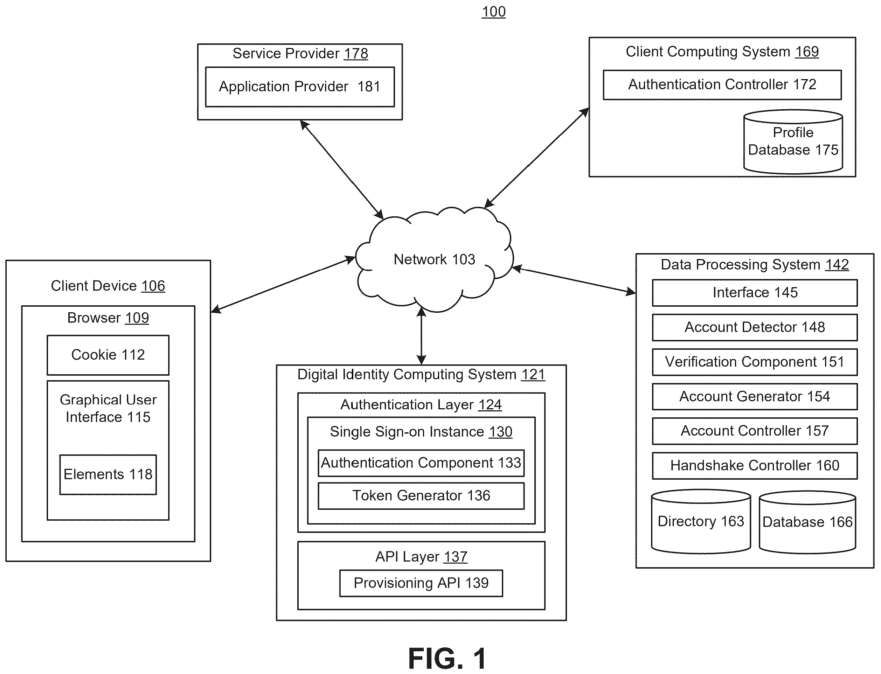

FIG. 1 is an illustrative example of a system 100 for provisioning profiles for dynamic federated application access. The system 100 can include, interface with, access, or otherwise utilize one or more of a client device 106, digital identity computing system 121, data processing system 142, or service provider 178. Client device 106, digital identity computing system 121, data processing system 142, and service provider 178 can communicate with each other unidirectionally or bidirectionally via network 103. Client device 106 can include, execute, or otherwise provide a browser 109. The browser 109 can include, store, maintain, or otherwise access a cookie 112. The browser 109, when executed, can provide, render, or otherwise present a graphical user interface (GUI) 115 with elements 118. The digital identity computing system 121 can include an authentication layer 124. The authentication layer 124 can refer to or include one or more computing systems that handle profile authentication in a single sign-on instance. The authentication layer 124 can include or provide a single sign-on instance 130. The single sign-on instance 130 can include an authentication component 133 and a token generator 136. Digital identity computing system 121 can also include API layer 137, where API layer 137 can include provisioning API 139. Data processing system 142 can include interface 145, account detector 148, verification component 151, account generator 154, action controller 157, handshake controller 160, directory 163, and database 166. Service provider 178 can include application provider 181.

The network 103 can include a wireless or wired connection for enabling the client device 106 to store, transmit, receive, or display information. The network 103 facilitates the client device 106 or the data processing system 142 communicating with internal subcomponents (described herein) or external components. The data processing system 142, for example, receives data corresponding to the client device 106, browser 109, or GUI 115 via the network 103. For example, data processing system 142 can receive a request transmitted by the browser 109 executing on the client device 106. The network 103 can include a hardwired connection (e.g., copper wire or fiber optics) or a wireless connection (e.g., wide area network (WAN), controller area network (CAN), local area network (LAN), or personal area network (PAN)). For example, the network 103 can support Wi-Fi, Bluetooth, BLE, or other communication protocols for transferring data.

The network 103 can facilitate communications in accordance with various communication protocols such as Transmission Control Protocol and Internet Protocol (TCP/IP), User Datagram Protocol (UDP), or IEEE communication protocols. In one example, the network 103 can include wireless communications according to Bluetooth specification sets, or another standard or proprietary wireless communication protocol. In another example, the network 103 can also include communications over a cellular network, including, e.g., a GSM (Global System for Mobile Communications), CDMA (Code Division Multiple Access), EDGE (Enhanced Data for Global Evolution) network.

System 100 can include, access, interface with or otherwise utilize a client device 106 or any other device that can interact with the computing systems of system 100 (e.g., digital identity computing system 121, data processing system 142, etc.). Client device 106 can include a laptop, a desktop computer, a smart phone, a tablet, or any other device that can execute executable code and communicate with data processing system 142, digital identity computing system 121, and service provider 178 over network 103. Client device 106 can include memory (e.g., RAM, SSD, etc.) that contains one or more computer-executable instructions and one or more processors configured to execute the one or more computer-executable instructions. Client device 106 can include one or more devices (e.g., keyboard, mouse, etc.) to allow profiles to interface with the client device 106. Client device 106 can be operated by or associated with a profile (e.g., a user or a client). Client device 106 can execute one or more applications, including any platform for performing various tasks or operations, such as a low-code platform, no-code platform, software-as-a-service platform (SaaS), web application, web browser, desktop application, or others. The one or more applications can be local applications (e.g., applications executed locally on the client device 106) or internet applications (e.g., applications that require an internet connection to execute). The one or more applications executed by client device 106 can correspond to profile provisioning, including profile provisioning for federated SSO.

Client device 106 can include, execute or otherwise provide a browser 109. For example, a browser 109 can refer to or include a software program or application that, when executed by one or more processors of a client device 106, allows the client device 106 to access, navigate, or interact with content on a network through a protocol, such as HTTP. Client device 106, via browser 109, can retrieve or parse HTML data (e.g., structure data), CSS data (e.g., style data), or JavaScript data (e.g., behavior data), and any other data used to generate or render browser 109. Browser 109 can include graphical web browsers, text-based web browsers, and any other type of browser accessible via client device 106. Browser 109 can be a web browser configured to access webpages when client device 106 has a connection to the internet (e.g., via Ethernet, via Wi-Fi, etc.). Browser 109 can receive one or more URLs or any other web address to fetch one or more target applications (e.g., webpages) from one or more servers. The one or more target applications can include content (e.g., graphical content, text-based content, etc.). For example, client device 106 can execute browser 109 to retrieve target application content corresponding to service provider 178. In some aspects, accessing the one or more target applications requires profile authentication, where digital identity computing system 121 or data processing system 142 can handle profile authentication.

Browser 109 can include, maintain, store, or otherwise access or use one or more cookies 112. Cookie 112 can refer to data stored by a webpage on browser 109, which can be used to store information about a session, status, or preferences, for example. Cookie 112 can be configured for session management, authentication, tracking, and personalization. Cookie 112 can include a session cookie corresponding to one or more login sessions, where the session cookie can maintain one or more login sessions. For example, cookie 112 can correspond to a profile authentication login session (e.g., identity provider authentication or client authentication). Further, cookie 112 can include an authentication cookie corresponding to completion of authentication. For example, cookie 112 can correspond to completion of authentication by an identity provider for SSO. In some aspects, cookie 112 can include tokens. For example, cookie 112 can include OAuth or OpenID connect tokens, where the tokens facilitate API access to portals or applications. Further, cookie 112 can be an HTTP-only cookie, where the HTTP-only cookie is not accessible via JavaScript.

Browser 109 can include, provide, render, or otherwise present GUI 115. For example, browser 109 can contain one or more GUIs, such as GUI 115. Client device 106 can provide at least one GUI (e.g., GUI 115) to display content corresponding to one or more web addresses. GUI 115 can be a web-based GUI implemented using HTML, CSS, or JavaScript. GUI 115 can be a static GUI (e.g., a webpage that displays content statically) or a dynamic GUI (e.g., a webpage that displays content dynamically). For example, a static GUI does not update the content displayed on the GUI while a dynamic GUI repeatedly updates the content displayed on the GUI. A dynamic GUI can update content displayed in the GUI by collecting data from one or more data sources over network 103. For example, GUI 115 can be a dynamic GUI that updates content in the GUI 115 based on data received from digital identity computing system 121, data processing system 142, or service provider 178.

GUI 115 can include, display, or otherwise provide elements 118. For example, GUI 115 can display or provide elements 118. Elements 118 can refer to interactable components of GUI 115. For example, elements 118 can include any combination of interactable or selectable elements (e.g., radio buttons, sliders, text input fields, etc.) or content (e.g., images, textual descriptions, icons, etc.). Elements 118 can be configured to facilitate user interaction with browser 109 by accepting user input, displaying information, or causing the GUI 115, browser 109, or client device 106 to perform actions in response to user interactions. In some aspects, the client device 106 can update elements 118 via GUI 115 in response to user input. The elements 118 presented via the GUI 115 can include static elements that display consistent information or dynamic elements that can change or update based on user input or other information (e.g., headers corresponding to a login session). In some aspects, the elements 118 can include web content or other data corresponding to a website, such as text, images, videos, links, or other elements that collectively form a web page. For example, the elements 118 can include or represent data or information corresponding to digital identity computing system 121, data processing system 142, or service provider 178.

Elements 118 can be configured to respond to inputs. Elements 118 can include text fields, where the text fields can only receive authorized data or information. For example, the text fields can receive one or more personal identifiers, such as a personal address or email address, where the text field can only receive a valid personal address or a valid email address. Client device 106 can determine whether one or more personal identifiers are valid by comparing the one or more personal identifiers against data stored in a database. In some aspects, GUI 115 can display one or more error messages responsive to receiving an unauthorized input via elements 118. Further, elements 118 can include one or more selectable elements, where selecting one or more of the selectable elements can cause one or more actions. Selecting at least one selectable element of elements 118 can cause client device 106 to retrieve data. For example, elements 118 in GUI 115 can include a selectable element that retrieves data from at least one of a database, a server, or a computing system responsive to selecting the selectable element. Selecting at least one selectable element of elements 118 in GUI 115 can also cause client device 106 to generate one or more browsers or one or more GUIs. For example, elements 118 in GUI 115 can include a selectable element that generates a second webpage with a second GUI responsive to selecting the selectable element.

The system 100 can include digital identity computing system 121. For example, digital identity computing system 121 can refer to one or more computing systems that facilitate profile authentication. Digital identity computing system 121 can be an identity provider (e.g., OpenID connect, Okta, Microsoft Entra ID, Google Identity Platform, Auth0, Amazon Cognito, etc.) configured to create, maintain, or manage profiles. Digital identity computing system 121 can verify login credentials (e.g., user name, password, unique identifier number, etc.) using one or more authentication protocols (e.g., OAuth, OpenID connect, SAML), store or manage identity data (e.g., names, emails, roles, permissions, etc.), facilitate single sign-on (e.g., non-federated single sign-on, federated single sign-on, etc.), protect login credentials using encryption and other secure authentication mechanisms, enforce security policies and standards, etc. One or more clients or third parties can control or manage digital identity computing system 121. For example, digital identity computing system 121 can operate on a server or computing system corresponding with one or more clients or one or more third parties. Further, client device 106 can transmit requests to or receive requests from digital identity computing system 121 over network 103. For example, client device 106 can send an authentication request to digital identity computing system 121 in response to providing one or more login credentials via elements 118 and selecting one or more of elements 118.

Digital identity computing system 121 can include authentication layer 124. For example, digital identity computing system 121 can refer to executable code that authenticates or verifies profiles. Authentication layer 124 can facilitate single sign-on (e.g., federated single sign-on and non-federated single sign-on). For example, authentication layer 124 can provide a dashboard to client device 106 for display on GUI 115 to receive login credentials (e.g., username, password, unique identifier number, etc.). Further, authentication layer 124 can facilitate session or token management (e.g., token/session expiration, token/session refresh, token/session revocation, etc.), and adaptive authentication. For example, authentication layer 124 can generate authentication tokens (e.g., JWTs, SAML assertions, etc.) responsive to authenticating a profile. Additionally, authentication layer 124 can facilitate adaptive authentication. For example, authentication layer 124 can connect to client device 106 over network 103 and gather device information (e.g., device type, device location, device login time, etc.) to determine an authentication strength, where the authentication layer 124 can enforce one or more additional security measures (e.g., multi-factor authentication, CAPCHA request, etc.) based on the authentication strength.

Authentication layer 124 can include single sign-on instance 130. For example, single sign-on instance 130 can refer to a web instance on browser 109 configured to receive one or more inputs and verify the one or more inputs. Authentication layer 124 can generate or otherwise provide single sign-on instance 130. In some aspects, authentication layer 124 provides single sign-on instance 130 for display on GUI 115 of browser 109. For example, selecting one of elements 118 on GUI 115 can send a single sign-on request to digital identity computing system 121 via network 103, and authentication layer 124 can provide single sign-on instance 130 to client device 106 for display on GUI 115 in response to the single sign-on request. Single sign-on instance 130 can be a dashboard displayed on GUI 115 that receives one or more login credentials (e.g., username, password, unique identifier number, etc.) via one or more fields. For example, the one or more fields correspond to one or more login credentials. The dashboard can also contain at least one selectable element among elements 118 that sends the one or more login credentials to digital identity computing system 121 over network 103 responsive to selecting the at least one selectable element. Further, single sign-on instance 130 can include a plurality of dashboards for display on GUI 115. For example, GUI 115 can include a first dashboard configured to receive a first login credential (e.g., a username) and a second dashboard configured to receive a second login credential (e.g., a password), where the second user dashboard replaces the first user dashboard on GUI 115 responsive to selecting at least one selectable element corresponding to the first dashboard. Additionally, single sign-on instance 130 can include one or more links (e.g., URLs) for display on GUI 115. For example, GUI 115 can include a first link to one or more webpages for provisioning profiles that do not have an account corresponding with digital identity computing system 121 or a second link to one or more webpages that provide one or more methods of authentication.

Single sign-on instance 130 can include authentication component 133. For example, authentication component 133 can refer to executable code that authenticates profiles. In some aspects, authentication component 133 operates in a backend environment instead of a frontend environment (e.g., GUI 115). Authentication component 133 can direct client device 106 to one or more authorization endpoints responsive to client device 106 receiving one or more login credentials, where authentication component 133 can verify or authenticate one or more login credentials received from client device 106 at the one or more authorization endpoints. For example, authentication component 133 can connect client device 106 to one or more authorization endpoints to compare the one or more login credentials received from client device 106 to a database (e.g., database 166) or a directory (e.g., directory 163). In some aspects, the one or more login credentials can include passwords, where digital identity computing system 121 stores the passwords in databases or directories as hashed or salted values using cryptographic hashing algorithms (e.g., bcrypt, argon2, PBKF2, etc.). Comparing the password against data stored in databases or directories can include hashing the passwords using the same algorithm used to encrypt the password. Further, authentication component 133 can verify or authenticate additional inputs. For example, authentication component 133 can verify a one-time password, a biometric authentication, or a push notification, where each of the additional inputs can be sent to authentication component 133 via client device 106.

In some aspects, authentication component 133 can generate one or more unique identifiers responsive to authentication of a profile. The one or more unique identifiers can correspond to digital identity computing system 121. The one or more unique identifiers can include universally unique identifiers (UID), globally unique identifiers (GUID), or universally unique lexicographically sortable identifiers (ULID). The one or more unique identifiers can also include profile-defined identifiers, name identifiers, persistent identifiers, object identifiers, subject identifiers, etc. The one or more unique identifiers can be static or dynamic. In some aspects, at least one of the one or more unique identifiers is a federated identifier. For example, the at least one unique identifier is a unique and persistent identifier corresponding to a federated authentication system. For example, the at least one unique identifier can be an employee identification number, a global personal number, a WFN associate identification number, or any other persistent unique identifier.

Authentication layer 124 can include token generator 136. For example, token generator 136 can refer to one or more computing systems that generate authentication tokens. Token generator 136 can generate tokens responsive to verifying or authenticating profiles. The tokens generated by token generator 136 can include access tokens (e.g., tokens that provide access to one or more resources), ID tokens (e.g., tokens that provide profile information), refresh tokens (e.g., tokens that provide a new access token without the need for re-authentication), SAML assertions (e.g., tokens corresponding to SAML-based SSO), and any other token generated, responsive to profile authentication. The tokens generated by token generator 136 can also include one or more token formats (e.g., JWT, Opaque, XML, etc.) and one or more token attributes (e.g., profile data, token expiration time, token issuer, etc.). Further, digital identity computing system 121 can encrypt or sign the tokens generated by token generator 136. For example, the digital identity computing system 121 can use symmetric algorithms (e.g., AES-GCM) or asymmetric algorithms (e.g., RSA-OAEP) to encrypt the JWTs generated by token generator 136. In another example, digital identity computing system 121 can use private keys to sign the JWTs generated by token generator 136. Client device 106 can validate signatures corresponding to the one or more tokens using a public key. In some aspects, client device 106 can also call an information endpoint using the tokens generated by token generator 136 to retrieve information corresponding to one or more profiles. Additionally, digital identity computing system 121 can store the tokens generated by token generator 136 in one or more cookies. For example, digital identity computing system 121 can store the JWTs generated by token generator 136 in an HTTP cookie, where the HTTP cookie can persist authentication. In some aspects, tokens generated by token generator 136 can include one or more unique identifiers corresponding to profiles.

System 100 can include API layer 137. For example, API layer 137 can refer to one or more computing systems that support one or more APIs corresponding to digital identity computing system 121. For example, API layer 137 can include one or more APIs that facilitate communication between third party applications (e.g., data processing system 142) and digital identity computing system 121. For example, API layer 137 can include APIs for authentication, authorization, profile management, token management, auditing, profile provisioning, etc. The APIs of API layer 137 can include one or more corresponding API endpoints. For example, an authentication API can include an authorization endpoint, a login endpoint, a multifactor authentication endpoint, etc. Third parties can use API calls to communicate with the APIs and the corresponding API endpoints of API layer 137. For example, client device 106 or data processing system 142 can send one or more HTTP requests to one or more of corresponding API endpoints of an API corresponding to API layer 137, where the HTTP requests can include HTTP methods such as GET, POST, and PUT.

API layer 137 can include provisioning API 139. For example, provisioning API 139 can refer to executable code configured to facilitate the provisioning, creation, updating, and deletion of profiles. In some aspects, provisioning API 139 can create, update, and delete one or more profiles simultaneously. Provisioning API 139 can include one or more scoping rules that define the scope of the provisioning API 139. For example, provisioning API 139 can include scoping rules that determine which profiles should be provisioned, created, updated, or deleted. Further, the provisioning API 139 can execute backend code in response to one or more events. For example, data processing system 142 can use provisioning API 139 to send a profile provisioning request to digital identity computing system 121 in response to detecting an absence of accounts from directory 163. For example, digital identity computing system 121 can use provisioning API 139 to connect with one or more provisioning API endpoints that facilitate profile provisioning. Third party applications can use provisioning API 139 to communicate requests corresponding to profile provisioning to digital identity computing system 121. For example, data processing system 142 can use provisioning API 139 to communicate with one or more API endpoints corresponding to provisioning API 139. For example, data processing system 142 can send HTTP requests (e.g., GET, POST, PUT, etc.) to communicate with the one or more API endpoints corresponding to provisioning API 139.

Still referring to FIG. 1, system 100 can include data processing system 142. For example, data processing system 142 can refer to or include one or more servers, computing systems, or a combination thereof that manage profile provisioning (e.g., federated profile provisioning). The data processing system 142 can include one or more processors, coupled with memory. Data processing system 142 can provision profiles that do not have accounts (e.g., a federated accounts) corresponding to one or more target applications, where the one or more target applications can correspond to one or more service providers (e.g., service provider 178). Data processing system 142 can communicate requests to or receive requests from digital identity computing system 121, service provider 178, and client device 106 over network 103 to facilitate profile provisioning. For example, action controller 157 can send one or more authentication requests corresponding to one or more profiles to digital identity computing system 121, where digital identity computing system 121 can authenticate the one or more profiles responsive to receiving the one or more authentication requests. In some aspects, data processing system 142 can include digital identity computing system 121 or any other similar system for authenticating profiles. For example, data processing system 142 can include a system configured to create, maintain, or manage profiles. Data processing system 142 can authenticate profiles using authentication layer 124, including single sign-on instance 130, authentication component 133, or token generator 136.

Data processing system 142 can include interface 145. For example, interface 145 can refer to an application programming interface, communication port, network port, or user interface configured to receive requests from one or more external servers or computing systems transmitted over network 103. For example, interface 145 can receive a request from client device 106 to access a target application, where the request includes at least one unique identifier corresponding to a profile. In another example, interface 145 can receive, responsive to generation of an account, a second request to access the target application. Further, interface 145 can sort or categorize the requests. For example, interface 145 prioritize a first authentication request corresponding to a first profile over a second authentication corresponding to a second profile based on a first profile role (e.g., associate employee) and a second profile role (e.g., employee manager). Additionally, interface 145 can collect information associated with the one or more requests. For example, interface 145 can collect the one or more unique identifiers corresponding to the one or more requests and store the one or more unique identifiers in a database (e.g., database 166). Interface 145 can provide a notification to client device 106 indicating data processing system 142 did or did not receive one or more requests from client device 106. In some aspects, interface 145 may communicate with one or more severs or computing systems over network 103 to verify that a profile corresponding to the one or more requests is eligible for authorization.

Data processing system 142 can include an account detector 148. For example, account detector 148 can refer to one or more computing systems configured to determine whether an account (e.g., a federated account) exists, where the account can provide access to one or more target applications. In some aspects, directory 163 can store data corresponding to one or more accounts. Account detector 148 can make a directory call to directory 163 to determine whether directory 163 contains an account corresponding to a profile. The directory call can include the one or more unique identifiers corresponding to a profile, where the account detector 148 determines whether the one or more unique identifiers correspond to an account. The determination that the one or more unique identifiers do or do not correspond to an account can be based on a response to a directory call. For example, directory 163 can transmit a response to account detector 148 responsive to account detector 148 transiting a directory call to directory 163, where the response indicates whether the one or more unique identifiers correspond to an account. The response can include a response code indicative of an absence of an account from directory 163, or the response can include data corresponding to the account (e.g., profile name, profile email, profile address, etc.). Further, account detector 148 can determine that the one or more unique identifiers correspond to an account and act, responsive to this determination. For example, account detector 148 can provide client device 106 access to one or more target applications responsive to determining an existence of the account in directory 163. Account detector 148 can also determine that that the one or more unique identifier do not correspond to an account and act, responsive to this determination. For example, account detector 148 can redirect browser 109 to a provisioning API endpoint corresponding to provisioning API 139 responsive to account detector 148 determining an absence of an account from directory 163.

Data processing system 142 can include action controller 157. Action controller 157 can refer to one or more computing systems configured to transmit communications from data processing system 142 to one or more servers or computing systems external over network 103. For example, action controller 157 can communicate with digital identity computing system 121, service provider 178, or client device 106. The communications sent by action controller 157 can include data/content or requests for data/content.

In some aspects, action controller 157 can provide content for display one or more GUIs or one or more browsers. Action controller 157 can provide content for display on one or more GUIs responsive to one or more actions. For example, action controller 157 can provide, for display on a first graphical user interface (e.g., a GUI on client device 106), one or more requests for one or more personal identifiers in response to the determination of an absence of an account from a directory. The one or more personal identifiers can include a name (e.g., first name, last name, etc.), an identification number (e.g., employee identification number), an email, a date of birth, and any other similar personal identifiers. Responsive to receipt of the one or more personal identifiers, client device 106 can transmit the one or more personal identifiers to data processing system 142, or data processing system 142 can redirect client device 106 to one or more GUIs or one or more browsers. In another example, action controller 157 can provide for display on a graphical user interface (e.g., a GUI on client device 106), a linking confirmation confirming the link between the at least one unique identifier and the one or more personal identifiers. For example, action controller 157 can display a linking confirmation that confirms at least one unique identifier and that one or more personal identifiers correspond to the same profile. In yet another example, action controller 157 can provide, for display on a graphical user interface (e.g., a GUI on client device 106), one or more selectable profile verification challenges. The selectable verification challenges can include multi-factor authentication, biometric identification, CAPTCHA requests, one-time password requests, or any other form of supplemental verification. Responsive to receipt of one or more inputs corresponding to the one or more selectable verification challenges, client device can transmit the inputs to data processing system 142. In yet another example, action controller 157 can provide, responsive to authentication of the profile, a client portal for displaying a graphical user interface (e.g., a GUI on client device 106).

In some aspects, action controller 157 can communicate requests to one or more servers or computing systems. In one example, action controller 157 can transmit a target application request to service provider 178 responsive to generation of the account in a directory (e.g., directory 163), where application provider 181 can provide the target application for display on client device 106 responsive to the target application request. In another example, action controller 157 can transmit a data request to client computing system 169 to retrieve data from profile database 175, where verification component 151 can compare the data retrieved from profile database 175 against one or more personal identifiers.

Data processing system can include verification component 151. For example, verification component 151 can refer to one or more computing systems that verify one or more profiles. In some aspects, verification component 151 can compare the one or more personal identifiers received via a graphical user interface (e.g., a GUI on client device 106) to data stored in a database, where the database includes information corresponding to one or more profiles. The information stored in the database can include ground truth data. For example, the information stored in the database can include data that is accurate, trusted, or verified, such that the data serves as a reference to verify the correctness of a system, model, or implementation. In one example, verification component 151 can compare the one or more personal identifiers received via a graphical user interface (e.g., a GUI on client device 106) to data stored in profile database 175, where profile database 175 includes ground truth data (e.g., name, email, address, role, etc.) corresponding to one or more profiles. In some aspects, verification component 151 can verify inputs corresponding to one or more verification challenges. For example, verification component 151 can compare an input corresponding to a one-time password challenge to a corresponding one-time password challenge solution. Action controller 157 can direct client device 106 to one or more browsers or one or more GUIs responsive to verification of the inputs corresponding to one or more verification challenges or responsive to verification of the one or more personal identifiers.

The verification component 151 can provide a technical improvement in the technical field of automated account provisioning. Traditional automated account provisioning systems can handle large volumes of accounts. These traditional automated account provisioning systems often include identity provider authentication, where the identity provider returns unique identifiers responsive to authenticating profiles. Ideally, the unique identifier established with the identity provider should be a globally unique number. For example, the unique identifier should be a number, for example, unique to a profile across all identity providers. However, the unique identifiers can sometimes include employee identification numbers, which are not always secure or globally unique. Verification component 151 addresses the shortcomings of traditional automated account provisioning by verifying profiles before provisioning accounts. In doing so, verification component 151 ensures that automated account provisioning systems do not encounter provisioning errors related to unique identifiers. This improvement allows automated account provisioning systems to handle high volumes of account provisioning from different sources, irrespective of the type of unique identifier generated by the identity provider.

Data processing system can include account generator 154. For example, account generator 154 can refer to one or more computing systems that generate accounts (e.g., federated accounts) for one or more profiles. In some aspects, account generator 154 can generate one or more accounts in response to verification of one or more personal identifiers or verification based on one or more verification challenges. For example, account generator 154 can generate accounts corresponding to one or more profiles after verification of the one or more profiles. In some aspects, generating the one or more accounts can include linking the at least one unique identifier to the one or more personal identifiers. Account generator 154 can store the one or more accounts and the corresponding information (e.g., unique identifiers, personal identifiers, etc.) in a database (e.g., database 166). Further, account generator 154 can sync the database with a directory (e.g., directory 163).

Data processing system can include handshake controller 160. For example, handshake controller 160 can refer to one or more computing systems that control one or more handshake setups corresponding to profile provisioning. In some aspects, handshake controller 160 can execute a handshake test to verify that data processing system 142 is properly configured to provision profiles. For example, handshake controller 160 can verify that account generator 154 properly generated accounts and handshake controller 160 can verify that verification component 151 properly verifies one or more personal identifiers. Handshake controller 160 can provide for display on a graphical user interface (e.g., a GUI of client device 106) a request for one or more login credentials. Handshake controller 160 can verify, responsive to receipt of one or more login credentials, the existence of an account based on the one or more login credentials. Handshake controller 160 can provide, for display on a graphical user interface (e.g., a GUI of client device 106), responsive to an absence of an account, a request for one or more personal identifiers. Handshake controller 160 can provide, for display on a graphical user interface (e.g., a GUI of client device 106), responsive to receiving one or more personal identifiers, a linking confirmation confirming the link between one or more unique identifiers and one or more personal identifiers. In some aspects, the handshake controller 160 can execute a system of record handshake. The system of record handshake can include verifying a connection between the identity provider (e.g., digital identity computing system 121) and the directory (e.g., directory 163). In some aspects, handshake controller 160 can verify that digital identity computing system 121 is compatible with data processing system 142. For example, handshake controller 160 can verify that a first data format corresponding to digital identity computing system 121 is compatible with a second data format corresponding to data processing system 142.

Data processing system 142 can include directory 163. For example, directory 163 can refer to one or more computing systems that store profile data, such as profile account information. Directory 163 can include a lightweight directory access protocol (LDAP) directory, such as Microsoft Active Directory OpenLDAP, Apache Directory Server, Red Hat Directory Server, IBM Security Directory Server, etc. Directory 163 can include a hierarchical data structure. For example, directory 163 can organize data into one or more categories. For example, directory 163 can use a tree-based structure, where the tree-based structure includes a root, one or more organizational units, or one or more users or groups. In some aspects, directory 163 can include one or more profile entries with one or more corresponding attributes. For example, the corresponding attributes can include a distinguished name (e.g., a unique identifier), a common name (e.g., a full profile name), a profile surname, a profile first name, a profile username, a profile email address, etc. The corresponding attributes can further include passwords, where directory 163 can store the passwords as hashed values for enhanced security. Further, directory 163 can integrate with single sign-on solutions. For example, the single sign-on process can involve communication with Directory 163. For example, digital identity computing system 121 or data processing system 142 can make one or more directory calls to directory 163 to determine an existence of an account in directory 163. In some aspects, directory 163 can enforce one or more policies corresponding to password expiration, lockout attempts, and role-based access control. For example, directory 163 can lock an account after five failed login attempts.

Data processing system 142 can include database 166. For example, database 166 can refer to one or more computing systems that stores accounts. Database 166 can include one or more database entries. In some aspects, each database entry can correspond to a profile. Each database entry of the one or more database entries can include one unique identifier (e.g., employee identification number) and one or more personal identifiers (e.g., name, email, address, etc.). Further, each database entry of the plurality of database entries can include one or more login credentials. The one or more login credentials can include the one or more login credentials corresponding to digital identity computing system 121. Database 166 can include account management information corresponding to each of the accounts. For example, database 166 can include an account creation time or an account deactivation time for each of the accounts in database 166. Further, database 166 can encrypt data based on a data type. For example, database 166 can encrypt passwords, addresses, government ID numbers, and other sensitive data corresponding to each of the accounts in database 166.

Still referring to FIG. 1, system 100 can include client computing system 169. For example, client computing system 169 can refer to one or more third-party computing systems that interact with data processing system 142. In some aspects, client computing system 169 can correspond to an employer and the one or more profiles can correspond to one or more employees. Client computing system 169 can facilitate one or more business functions. For example, client computing system 169 can facilitate enterprise resource planning, customer relationship management, cybersecurity and compliance, communication or collaboration, data management or data storage, human resource solutions, profile authentication, and any other business function. Client computing system 169 can include authentication controller 172, where authentication controller 172 can facilitate profile authentication. Authentication controller 172 can provide, for display on a graphical user interface (e.g., a GUI of client device 106), a request for one or more client portal login credentials corresponding to a profile. Authentication controller 172 can further authenticate, responsive to receipt of the one or more client portal login credentials, the profile. Authentication controller 172 can further provide, responsive to authentication of the profile, a client portal.

Client computing system 169 can include profile database 175. For example, profile database 175 can refer to one or more computing systems that store data corresponding to one or more profiles. For example, profile database 175 can include, for each profile in profile database 175, a profile name, a profile date of birth, a profile gender, a profile nationality or citizenship, a profile email, a profile phone number, a profile home address, a profile government ID number, a profile role/title, a profile team, a profile salary, and any other information corresponding to one or more profiles. The data in profile database 175 can be ground truth data. For example, the information stored in profile database 175 database can include data for example accurate, trusted, or verified such that the data serves as a reference to verify the correctness of a system, model, or implementation. The data in profile database 175 can be data that profiles or third parties have verified before client computing system 169 included the data in profile database 175.

Still referring to FIG. 1, system 100 can include service provider 178. For example, service provider 178 can refer to one or more computing systems that provide one or more services to clients. Service provider 178 can include application provider 181, where application provider 181 can correspond to or more applications that provide one or more services to clients. The applications corresponding to application provider 181 can include web applications, mobile applications, desktop applications, cloud applications, enterprise applications, and any other type of digital application. In some aspects, the applications can require login credentials corresponding to a profile or account. For example, service provider 178 must receive and verify login credentials corresponding to the one or more applications before application provider 181 can provide the one or more applications. In some aspects, the applications provided by application provider 181 can correspond to a federated account. For example, the one or more applications provided by application provider 181 can correspond to a single set of login credentials. For example, service provider 178 can provide applications via application provider 181 responsive to receipt and verification of login credentials corresponding to digital identity computing system 121. In some aspects, application provider 181 can provide applications for display on a device (e.g., client device 106). For example, application provider 181 can provide one or more applications for display on GUI 115 of client device 106 responsive to generation of an account in directory 163. In some aspects, data processing system 142 can be a service provider that provides one or more applications (e.g., target applications). For example, data processing system 142 can provide, for display on a graphical user interface (e.g., a GUI of client device 106) responsive to generation of an account, one or more target applications.

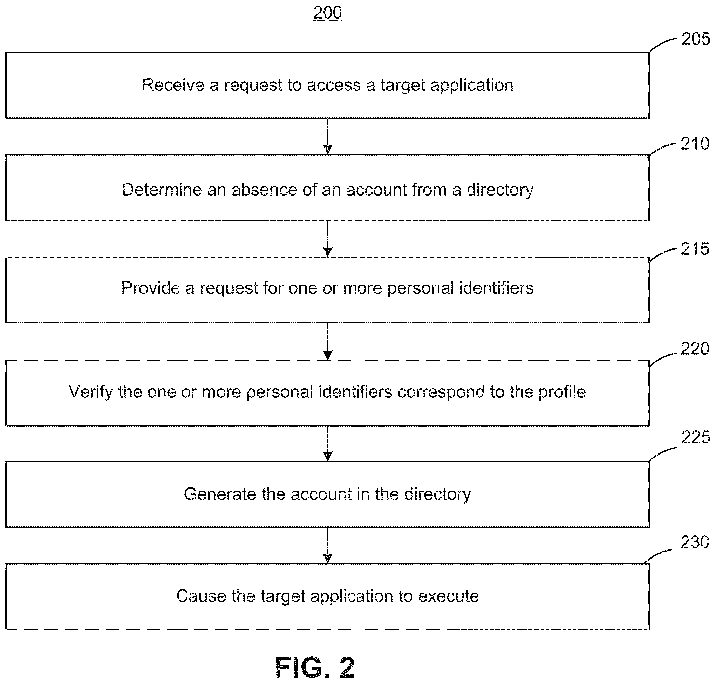

Referring now to FIG. 2, a method for provisioning profiles is shown. Method 200 can include receiving a request to access a target application at block 205, determining an absence of an account from a director at block 210, providing a request for one or more personal identifiers at block 215, verifying the one or more personal identifiers correspond to the profile at block 220, generating the account in the directory at block 225, and causing the target application to execute at block 230.

Method 200 can include block 205. At block 205, one or more processors (e.g., processors corresponding to data processing system 142) can receive, from a device (e.g., client device 106), a request to access a target application. The one or more processors can receive the request to access the target application responsive to authenticating a profile. For example, the one or more processors can receive a request from client device 106 to access a target application responsive to digital identity computing system 121 authenticating a profile. Further, the request to access the target application can include at least one unique identifier corresponding to a profile. The at least one unique identifier can include a unique and persistent identifier corresponding to a federated authentication system. For example, the at least one unique identifier can be an employee identification number, a global personal number, a WFN associate identification number, or any other persistent unique identifier. Further, the at least one unique identifier can correspond to authentication of a profile. For example, digital identity computing system 121 can produce a unique identifier, responsive to authentication of a profile. In some aspects, the digital identity computing system 121 can embed the at least one unique identifier in a token (e.g., JWT), a cookie, or a combination thereof.

Method 200 can further include block 210. At block 210, one or more processors (e.g., processors corresponding to data processing system 142) can determine an absence of an account from a directory based on the at least one unique identifier. The one or processors can make this determination responsive to the request to access the target application. The one or more processors can make a directory call to a directory, where the directory call includes the at least one unique identifier. For example, the one or more processors can make a directory call to directory 163, where the at least one unique identifier can be a parameter in the directory call. Directory 163 can provide a response responsive to the one or more processors transmitting a directory call to directory 163. For example, directory 163 can respond with a response code indicative of an absence of an account from directory 163, or directory 163 can respond with data corresponding to the account (e.g., profile name, profile email, profile address, etc.).

Method 200 can further include block 215. At block 215, one or more processors (e.g., processors corresponding to data processing system 142) can provide a request for one or more personal identifiers. The one or more personal identifiers can include information such as a profile name, a profile address, a profile identification number, and any other personal identifiers that the one or more processors could use to verify a profile. The one or more processors can provide the request for display on a graphical user interface, responsive to determination of the absence of the account from the directory. For example, the one or more processors can display a dashboard on GUI 115 of client device 106, where the dashboard includes one or more fields (e.g., text fields) configured to receive one or more personal identifiers. The one or more processors can receive the one or more personal identifiers responsive to receipt of a response to the request for one or more personal identifiers. For example, the one or more processors can receive the one or more personal identifiers responsive to input of the one or more personal identifiers in the one or more fields and selection of at least one selectable element among elements 118 on the dashboard.

Method 200 can further include block 220. At block 220, one or more processors (e.g., processors corresponding to data processing system 142) can verify that the one or more personal identifiers correspond to the profile. The one or more processors can make this verification responsive to receipt of the one or more personal identifiers via a graphical user interface (e.g., GUI 115). The verification can include one or more verification actions. In one example, the one or more processors can compare the one or more personal identifiers to data stored in profile database 175, where the profile database can include ground truth data corresponding to one or more profiles. The one or more processors can verify (e.g., in part or in whole) the profile responsive to matching the one or more personal identifiers to data stored in profile database 175. In another example, the one or more processors can transmit one or more verification challenges (e.g., multi-factor authentication, biometric identification, CAPTCHA request, etc.) to client device 106. The one or more processors can verify (e.g., in part or in whole) the profile responsive to successful completion of the one or more verification challenges.

Method 200 can further include block 225. At block 225, one or more processors (e.g., processors corresponding to data processing system 142) can generate the account in the directory (e.g., directory 163). The one or more processors can create the account responsive to verification of the one or more personal identifiers. The directory can include a link that maps the at least one unique identifier to the one or more personal identifiers. Further, the link can map the at least one unique identifier to one or more login credentials (e.g., username, password, etc.) corresponding to a third-party authenticator (e.g., digital identity computing system 121).

Method 200 can further include block 230. At block 230, the one or more processors (e.g., processors corresponding to data processing system 142) can cause the target application to execute using the generated account. The one or more processors can cause the target application to execute, responsive to generation of the account in the directory. The one or more processors can verify that the generated account exists. For example, the one or more processors can make a directory call to directory 163 to verify that the account exists in directory 163. In some aspects, the directory 163 can return a verification code that indicates the account exists in directory 163. Further, the one or more processors can transmit a target application request to an application provider responsive to verification of the account in the directory, where the target application request corresponds to a target application. For example, the one or more processors can transmit a target application request to service provider 178, where the target application request includes the verification code. Additionally, the application provider can provide a response to the target application request. For example, service provider 178 can provide, for display on a graphical user interface (e.g., a GUI of client device 106), the target application.

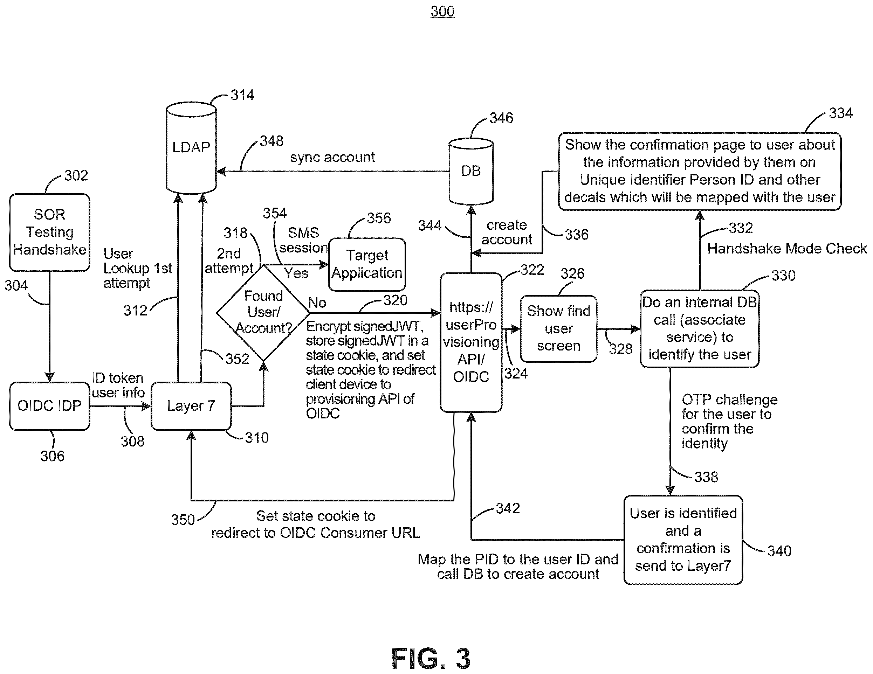

Referring now to FIG. 3, a method for provisioning profiles is shown. In some aspects, method 300 can be a detailed implementation of method 200. Method 300 can include executing a system of record testing handshake at block 302, authenticating a profile at block 306, providing an application layer at block 310, accessing an LDAP directory at block 314, receiving a response to the directory call at block 318, transmitting requests to a user provisioning API endpoint at block 322, providing a find user GUI at block 326, comparing the one or more personal identifiers against a profile data stored in a client database at block 330, providing a confirmation page at block 334, transmitting a confirmation to the application layer at block 340, uploading one or more unique identifiers and one or more personal identifiers to a database at block 346, and providing a target application at block 356. Further, method 300 can include exiting a testing handshake and loading an identity provider graphical user interface (GUI) at operation 304, generating a user token at operation 308, transmitting a directory call at operation 312, encrypting a token, storing the token in a cookie, and connecting to a user provisioning API endpoint at operation 320, connecting to a find user GUI at operation 324, connecting to an internal database at operation 328, initiating a handshake mode check at operation 332, verify the connection between the one or more unique identifiers and the one or more personal identifiers at operation 336, providing one or more verification challenges at operation 338, mapping the one or more unique identifiers to the one or more personal identifiers and creating an account at operation 342, redirecting to the provisioning API endpoint at operation 342, uploading a mapping of the one or more unique identifiers to the one or more personal identifiers to a database at operation 344, syncing the database with the LDAP directory at operation 348, redirecting to a consumer URL at operation 350, transmitting a second directory call at operation 352, and connecting to a target application at operation 354.

At block 302, an integration platform (e.g. data processing system 142) can execute a system of record testing handshake. The testing handshake can include verifying the connection between a system of record (e.g., directory 163) and the integration platform or an identity provider (e.g., digital identity computing system 121). The testing handshake can include the integration platform transmitting one or more search requests (e.g., directory call) to the system of record, and the system of record providing one or more search responses to the one or more search requests. The integration platform can provide one or more notifications (e.g., error messages) to a device (e.g., client device 106) responsive to an unsuccessful testing handshake. The one or more notifications can include information explaining why the testing handshake was unsuccessful. The integration platform can exit the system of record testing handshake and provide an identity provider graphical user interface at operation 304 responsive to a successful testing handshake.

At block 306, an identity provider (e.g., digital identity computing system 121) can authenticate a profile (e.g., a new employee at a company). The identity provider can include a third-party identity provider, such as OpenID Connect, Microsoft Azure Active Directory, Google Identity Platform, Okta, Ping Identity, Amazon Cognito, and any other third-party identity provider. Authenticating a profile can include displaying a first GUI configured to receive one or more credentials corresponding to the profile. For example, an identity provider can receive a username, a password, a PIN, an email, and any other identifiers used to authenticate the profile. The identity provider can compare the received credentials against profile data stored in an identity provider database or a third-party directory. Further, authenticating a profile can include providing a second GUI corresponding to an additional authentication process. The additional authentication process can include sending a one-time password to an email or phone number corresponding to the profile, where the second GUI must receive the one-time password. The additional authentication process can also include the second GUI prompting the user to provide one or more personal identifiers (e.g., fingerprints, facial data, biometric data, etc.).

In response to authenticating a profile, the identity provider can provide an authentication token and redirect the integration platform (e.g., data processing system 142) to the application layer at operation 308. The authentication token can include a JSON Web Token (JWT) or any other similar token. The authentication token can include a unique identifier corresponding to the authenticated profile or metadata corresponding to the profile. For example, the unique identifier can include an employee ID number, and the information corresponding to a profile can include an employee name, employee email address, employee address, employee role, etc. Further, the authentication token can include a cryptographic signature (e.g., a hash) verifying the validity or authenticity of the authentication token. The cryptographic signature can correspond to a signing algorithm provided by a secret or private key. The authentication token can indicate a token lifespan, where the token lifespan corresponds to a period of time during which the token remains effective. A client can use the authentication token to make an API request to one or more backend services. For example, client device 106 can send an HTTP request to an API endpoint to validate the authentication token or return information (e.g., user information) about a profile corresponding to the token.

At block 310, an application layer can facilitate profile provisioning. The application layer can be layer 7 of the open systems interconnection model, where layer 7 manages and delivers application-level network services. The application layer can provide services such as web browsing, email, file transfers, and data formatting/encoding. Further, the application layer can include authentication protocols, such as OAuth 2.0, OpenID Connect, SAML, Kerberos, and any other authentication protocol compatible with the application layer. In some aspects, the application layer can correspond to data processing system 142. For example, data processing system 142 can use digital identity computing system 121 to implement one or more authentication protocols at the application layer, where data processing system 142 includes the application layer.

At operation 312, the application layer can transmit a directory call to an LDAP directory at block 314. The LDAP directory at block 314 can be a directory that includes account information corresponding to profiles. For example, the LDAP directory at block 314 can be a directory corresponding to data processing system 142, where the LDAP directory includes information corresponding to federated accounts. Further, the directory call can include the token generated at operation 308 in the directory call. In some aspects, the directory call can include one or more unique identifiers corresponding to the token as a parameter of the directory call.

At block 318, the LDAP directory at block 314 can produce a response to the directory call. For example, the LDAP directory at block 314 can produce a response code indicative of an absence of the account from the LDAP directory or an existence of the account in the LDAP directory. In some aspects, the response can include information corresponding to the account (e.g., profile name, profile email, profile address, etc.) responsive to the existence of the account in the LDAP directory at block 314.

At operation 320, the application layer at block 310 can encrypt the token generated at operation 308 or embed the token in a cookie. The application layer at block 310 can encrypt the tokens using Json web encryption, AES encryption, XML encryption, TLS encryption, or any other encryption standard compatible with the tokens. Further, the cookie can include a session cookie, a state cookie, an HTTP cookie, SamSite cookie, or any other cookie that is compatible with the tokens. In some aspects, operation 320 can also include the application layer at block 516 redirecting browser 109 of client device 106 to a provisioning API endpoint at block 322, where the provisioning API endpoint corresponds to a provisioning API. Further, redirecting browser 109 to the provisioning API endpoint at block 322 can include the application layer at block 322 setting an HTTP status code (e.g., status code 302), where the HTTP status code instructs browser 109 to redirect to the provisioning API endpoint at block 322. The provisioning API endpoint at block 322 can be an API of an authentication protocol (e.g., OpenID connect). The provisioning API endpoint at block 322 can facilitate the provisioning, creation, updating, and deletion of profiles. In some aspects, the provisioning API endpoint at block 322 can create, update, and delete one or more profiles simultaneously. Third party applications can communicate requests corresponding to profile provisioning to the provisioning API endpoint at block 322 via the provisioning API. For example, data processing system 142 can use the provisioning API to communicate with the provisioning API endpoint at block 322. For example, data processing system 142 can send HTTP requests (e.g., GET, POST, PUT, etc.) to communicate with the provisioning API endpoint at block 322.

At operation 324, the integration platform (e.g., data processing system 142) can connect to a find user GUI at block 326. The find user GUI at block 326 can be a GUI configured to receive one or more personal identifiers. The one or more personal identifiers can include profile name (e.g., first name, last name, etc.), profile date of birth, profile government ID number, profile employee identification number, and so on. At operation 328, the profile can connect to an internal database. The internal database can be a profile database (e.g., profile database 175) that includes ground truth information corresponding to one or more profiles. At block 330, the integration platform can call the internal database to retrieve data corresponding to one or more profiles. Further, block 330 can include the integration platform comparing the data from the internal database to the one or more personal identifiers to verify the identities of one or more profiles.

At operation 332, the integration platform (e.g., data processing system 142) can initiate a handshake mode check. The handshake mode check can include one or more tests to verify that the integration platform can map the one or more unique identifiers to the one or more personal identifiers to create an account (e.g., a federated account). At block 334, the integration platform can provide, for display on a graphical user interface (e.g., a GUI on client device 106) responsive to successfully completing the handshake mode check, a confirmation page confirming the mapping between the one or more unique identifiers and the one or more personal identifiers. The confirmation page can include a selectable element (e.g., one of elements 118) confirming the proposed mapping and a selectable element rejecting the proposed mapping. At operation 336, the integration platform can perform one or more handshake testing steps to verify the connection between the one or more unique identifiers and the one or more personal identifiers.

At operation 338, the integration platform (e.g., data processing system 142) can provide, for display on a graphical user interface (e.g., a GUI of client device 106) responsive to receipt of the one or more personal identifiers or confirmation of the mapping between the one or more unique identifiers and the one or more personal identifiers, verification challenge page with one or more selectable elements corresponding to verification challenges. The verification challenges can include a one-time password sent to an email or a phone number or any other challenge that facilitates profile verification. At block 340, the integration platform can transmit, responsive to successful completion of the one or more verification challenges, a confirmation signal to the application layer at block 310 confirming the mapping between the one or more unique identifiers and the one or more personal identifiers. At operation 342, the integration platform can map the one or more unique identifiers with the one or more personal identifiers, call the database at block 346, and redirect to the provisioning API endpoint at block 322.

At operation 344, the integration platform (e.g., data processing system 142) can upload the one or more unique identifiers and the one or more personal identifiers to the database at block 346 to create an account corresponding to the one or more unique identifiers and the one or more personal identifiers. At operation 348, the database at block 346 can sync the account information with the LDAP at block 314. At operation 350, the integration platform uses the encrypted token or the cookie to redirect browser 109 of client device 106 to a consumer URL corresponding to the authentication protocol. Redirecting browser 109 to the consumer URL can include the application layer at block 322 setting an HTTP status code (e.g., status code 302), where the HTTP status code instructs browser 109 to redirect to the consumer URL.

At operation 352, the application layer at block 310 can transmit a second directory call to the LDAP directory at block 314 to determine if an account corresponding to the one or more unique identifiers exists. At block 356, the integration platform (e.g., data processing system 142) can provide, responsive to a determination that the account exists, the target application for display on a graphical user interface (e.g., a GUI on client device 106).

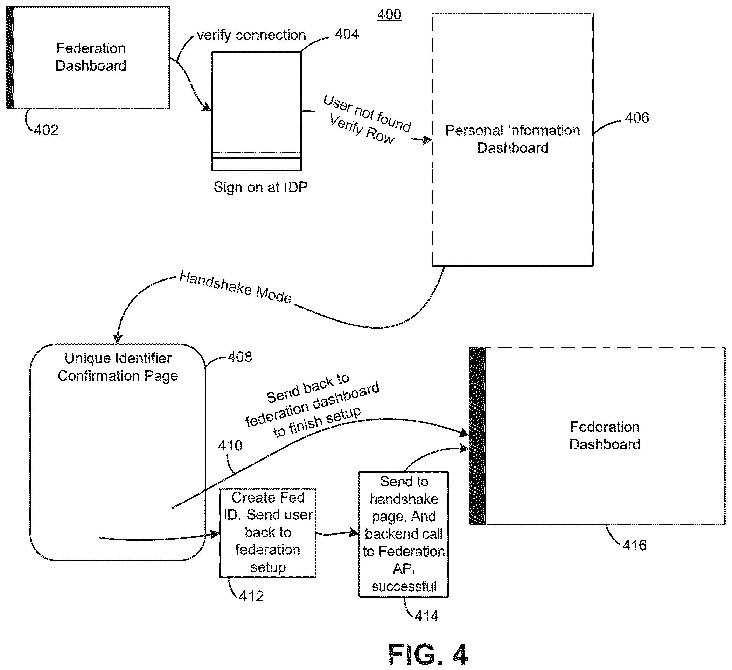

Referring now to FIG. 4, a method for performing a handshake setup. The method 400 can include providing a federation dashboard at block 402, providing a sign-on page at block 404, providing a personal information dashboard at block 406, providing a unique identifier confirmation page at block 408, providing the federation dashboard at operation 410, creating a federated identification at block 412, calling a federation API at block 414, and providing the federation dashboard at block 416.

At block 402, the integration platform (e.g., data processing system 142) can provide, for display on a graphical user interface (e.g., a GUI of client device 106), a federation dashboard. The federation dashboard can include one or more selectable elements. At least one of the selectable elements can include a link for configuring federated single sign-on. Further, at least one of the selectable elements can include a button that initiates a handshake setup.

At block 404, the integration platform (e.g., data processing system 142) can provide, for display on a graphical user interface (e.g., a GUI of client device 106) responsive to selecting the button that initiates the handshake setup, a sign in dashboard. The sign in dashboard can include one or more fields configured to receive one or more login credentials. In some aspects, the sign in dashboard can update responsive to receiving one or more login credentials. Further, the sign in dashboard can include at least one link configured to provide one or more resources for addressing account problems and a link configured to provide one or more alternative sign-in options (e.g., one-time password).

At block 406, the integration platform (e.g., data processing system 142) can provide, for display on a graphical user interface (e.g., a GUI of client device 106) responsive to not detecting an account corresponding to the one or more login credentials, a personal information dashboard. The personal information dashboard can include one or more fields configured to receive one or more personal identifiers (e.g., name, date of birth, government ID number, employee identification number, etc.).

At block 408, the integration platform (e.g., data processing system 142) can provide, for display on a graphical user interface (e.g., a GUI of client device 106), a unique identifier confirmation page. The unique identifier confirmation page can confirm a mapping between one or more unique identifiers and one or more personal identifiers. The confirmation page can include a selectable element for confirming the proposed mapping between the one or more unique identifiers and the one or more personal identifiers and a selectable element for rejecting the proposed mapping between the one or more unique identifiers and the one or more personal identifiers.

At operation 410, the integration platform (e.g., data processing system 142) can, responsive to selection of the selectable element rejecting the proposed mapping between the one or more unique identifiers and the one or more personal identifiers, redirect to the federation dashboard at block 416. At block 412, the integration platform can, responsive to selection of the selectable element confirming the proposed mapping between the one or more unique identifiers and the one or more personal identifiers, generate a federated account. At block 414, the integration platform can call a federation API and redirect to the federation dashboard at block 416.

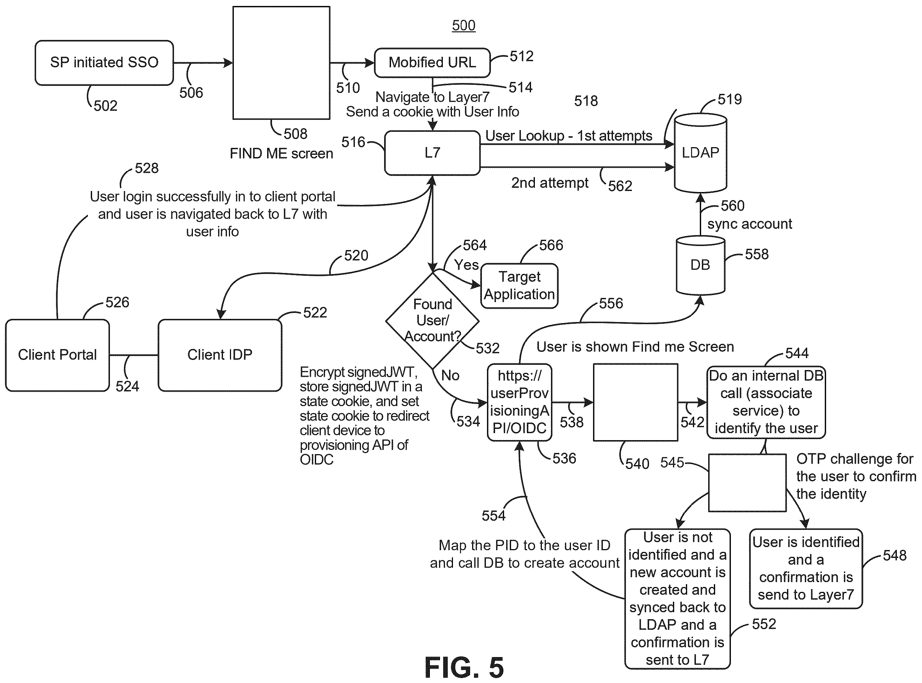

Referring now to FIG. 5, a method for provisioning profiles is shown. In some aspects, method 500 can be a detailed implementation of method 200. Method 500 can include executing initiating a SSO at a SP at block 502, providing a find me GUI at block 508, selecting a modified URL at block 512, providing an application layer at block 516, accessing a directory at block 519, authenticating at a client identity provider at block 522, providing a client portal at block 526, receiving a response to the directory call at block 532, transmitting one or more requests to a user provisioning API endpoint at block 536, providing a find user GUI at block 540, comparing the personal identifiers against a profile data stored in a client database at block 544, providing one or more verification challenges at block 545, transmitting a confirmation to the application layer at block 548, generating a new account at block 552, uploading one or more unique identifiers and one or more personal identifiers to a database at block 558, and providing a target application at block 566. Further, method 500 can include connecting to a find me screen at operation 506, providing a modified URL at operation 510, navigating to an application layer at operation 514, transmitting a directory call at operation 518, connecting to a client IDP at operation 520, connecting to a client portal at operation 524, navigating back to the application layer with user information at operation 528, encrypting a token, storing the token in a cookie, and connecting to a user provisioning API endpoint at operation 534, connecting to a find user GUI at operation 538, connecting to an internal database at operation 542, providing a one-time password (OTP) challenge at block 545, mapping the one or more unique identifiers to the one or more personal identifiers and creating an account at operation 554, uploading a mapping of the one or more unique identifiers to the one or more personal identifiers to a database at operation 556, syncing the database with the LDAP directory at operation 560, transmitting a second directory call at operation 562, and connecting to a target application at operation 564. It should be noted that many of the blocks and operations in FIG. 5 are similar to or the same as the blocks and operations in FIG. 3.

At block 502, SSO can be initiated at the service provider (SP). For example, the SSO process can be initiated from an entity other than the identity provider (e.g., digital identity computing system 121). For example, the data processing system 142 can initiate the SSO process. In some aspects, initiating the SSO process at the SP can include displaying a login dashboard. For example, data processing system 142 can provide, for display on a graphical user interface (e.g., a GUI of client device 106), a login dashboard, where the login dashboard is configured to receive one or more login credentials. The one or more login credentials can include a profile username, a profile email, a profile password, or any other login credentials. At operation 506, the integration platform can connect to a find me screen. At block 508, the integration platform (e.g., data processing system 142) can provide, for display on a graphical user interface (e.g., a GUI of client device 106), the find me screen. The find me screen at block 508 can be configured to receive one or more personal identifiers. For example, the find me screen can include one or more text fields configured to receive a profile first name, a profile last name, a profile date of birth, a profile government ID number, a profile employee identification number, etc.

At operation 510, data processing system 142 can provide, for display on a graphical user interface (e.g., a GUI of client device 106), a modified URL. The modified URL can include a URL that is altered or adapted for mobile users. At block 512, a profile can select the modified URL. At operation 514, the data processing system 142 can, responsive to a profile selecting the modified URL at block 512, navigate to an application layer at block 516 with the one or more personal identifiers received at block 508, where the one or more personal identifiers can be embedded in a cookie.

At block 516, an application layer can facilitate profile provisioning. The application layer can be layer 7 of the open systems interconnection model, where layer 7 manages and delivers application-level network services. The application layer can provide services such as web browsing, email, file transfers, and data formatting/encoding. Further, the application layer can include authentication protocols, such as OAuth 2.0, OpenID connect, SAML, Kerberos, and any other authentication protocol compatible with the application layer. In some aspects, the application layer can correspond to data processing system 142. For example, data processing system 142 can use digital identity computing system 121 to implement one or more authentication protocols at the application layer, where data processing system 142 includes the application layer.

At operation 518, the application layer can transmit a directory call to an LDAP directory at block 519. The directory call can include the information gathered at block 508 or block 522. Further, the LDAP directory at block 519 can be a directory that includes account information corresponding to profiles. For example, the LDAP directory at block 519 can be a directory corresponding to data processing system 142, where the LDAP directory includes information corresponding to federated accounts.

At operation 520, the application layer at block 516 can connect to a client IDP. The client IDP can be an identity provider corresponding to client computing system 169. At block 522, data processing system 142 can provide, for display on a graphical user interface (e.g., a GUI of client device 106), a client IDP login dashboard. In some aspects, the login dashboard is an SSO dashboard. The client IDP login dashboard can be configured to receive one or more client IDP login credentials. The one or more client IDP login credentials can include a profile username, a profile email, a profile password, or any other login credentials.

At block 522, the client IDP can authenticate a profile (e.g., a new employee at a company). The identity provider can include a third-party identity provider, such as OpenID Connect, Microsoft Azure Active Directory, Google Identity Platform, Okta, Ping Identity, Amazon Cognito, and any other third-party identity provider. The identity provider can compare the received credentials against profile data stored in an identity provider database or a third-party directory. Further, authenticating a profile can include providing a second GUI corresponding to an additional authentication process. The additional authentication process can include sending a one-time password to an email or phone number corresponding to the profile, where the second GUI must receive the one-time password. The additional authentication process can also include the second GUI prompting the user to provide one or more personal identifiers (e.g., fingerprints, facial data, biometric data, etc.).

In response to authenticating a profile, the client identity provider at block 522 can provide an authentication token. The authentication token can include a Json Web Token (JWT) or any other similar token. The authentication token can include a unique identifier corresponding to the authenticated profile or metadata corresponding to the profile. For example, the unique identifier can include an employee ID number, and the information corresponding to a profile can include an employee name, employee email address, employee address, employee role, etc. Further, the authentication token can include a cryptographic signature (e.g., a hash) verifying the validity or authenticity of the authentication token. The cryptographic signature can correspond to a signing algorithm provided by a secret or private key. The authentication token can indicate a token lifespan, where the token lifespan corresponds to a period of time during which the token remains effective. A client can use the authentication token to make an API request to one or more backend services. For example, client device 106 can send an HTTP request to an API endpoint to validate the authentication token or return information (e.g., user information) about a profile corresponding to the token.

At block 532, the LDAP directory at block 519 can produce a response to the directory call. For example, the LDAP directory at block 519 can produce a response code indicative of an absence of the account from the LDAP directory or an existence of the account in the LDAP directory. In some aspects, the response can include information corresponding to the account (e.g., profile name, profile email, profile address, etc.) responsive to the existence of the account in the LDAP directory at block 519.

At operation 534, the application layer at block 516 can encrypt the token generated at block 522 or embed the token in a cookie. The application layer at block 516 can encrypt the tokens using Json web encryption, AES encryption, XML encryption, TLS encryption, or any other encryption standard compatible with the tokens. Further, the cookie can include a session cookie, a state cookie, an HTTP cookie, SamSite cookie, or any other cookie that is compatible with the tokens. In some aspects, operation 534 can include the application layer at block 516 redirecting browser 109 of client device 106to a provisioning API endpoint at block 536, where the provisioning API endpoint corresponds to a provisioning API. Further, redirecting browser 109 to the provisioning API endpoint at block 536 can include the application layer at block 516 setting an HTTP status code (e.g., status code 302), where the HTTP status code instructs browser 109 to redirect to the provisioning API endpoint at block 536. The provisioning API endpoint at block 536 can be an API of an authentication protocol (e.g., OpenID connect). The provisioning API endpoint at block 322 can facilitate the provisioning, creation, updating, and deletion of profiles. In some aspects, the provisioning API endpoint at block 536 can create, update, and delete one or more profiles simultaneously. Third party applications can communicate requests corresponding to profile provisioning to the provisioning API endpoint at block 536 via the provisioning API. For example, data processing system 142 can use the provisioning API to communicate with the provisioning API endpoint at block 536. For example, data processing system 142 can send HTTP requests (e.g., GET, POST, PUT, etc.) to communicate with the provisioning API endpoint at block 536.

At operation 538, the integration platform (e.g., data processing system 142) can connect to a find user GUI at block 540. The find user GUI at block 540 can be a GUI configured to receive one or more personal identifiers. The one or more personal identifiers can include profile name (e.g., first name, last name, etc.), profile date of birth, profile government ID number, profile employee identification number, and so on. At operation 542, the profile can connect to an internal database. The internal database can be a profile database (e.g., profile database 175) that includes ground truth information corresponding to one or more profiles. At block 544, the integration platform can call the internal database to retrieve data corresponding to one or more profiles. Further, block 544 can include the integration platform comparing the data from the internal database to the one or more personal identifiers to verify the identities of one or more profiles.

At block 545, the integration platform (e.g., data processing system 142) can provide, for display on a graphical user interface (e.g., a GUI of client device 106) responsive to verification that the one or more personal identifiers correspond to a profile, a verification challenge page with one or more selectable elements corresponding to verification challenges. The verification challenges can include a one-time password sent to an email or a phone number, or any other challenge that facilitates profile verification. At block 548, the integration platform can transmit, responsive to successful completion of the one or more verification challenges, a confirmation signal to the application layer at block 516 confirming the mapping between the one or more unique identifiers and the one or more personal identifiers. At block 552, the integration platform can, responsive to not verifying the profile at block 545, initiate the creation of a new account. At operation 554, the integration platform can, responsive to verifying the profile at block 545, map the one or more unique identifiers with the one or more personal identifiers, call the database at block 558, and redirect to the provisioning API endpoint at block 536.

At operation 556, the integration platform (e.g., data processing system 142) can upload the one or more unique identifiers and the one or more personal identifiers to the database at block 558 to create an account corresponding to the one or more unique identifiers and the one or more personal identifiers. At operation 560, the database at block 558 can sync the account information with the LDAP at block 519.

At operation 562, the application layer at block 516 can transmit a second directory call to the LDAP directory at block 519 to determine if an account corresponding to the one or more unique identifiers exists. At block 566, the integration platform (e.g., data processing system 142) can provide, responsive to a determination that the account exists, the target application for display on a graphical user interface (e.g., a GUI on client device 106).

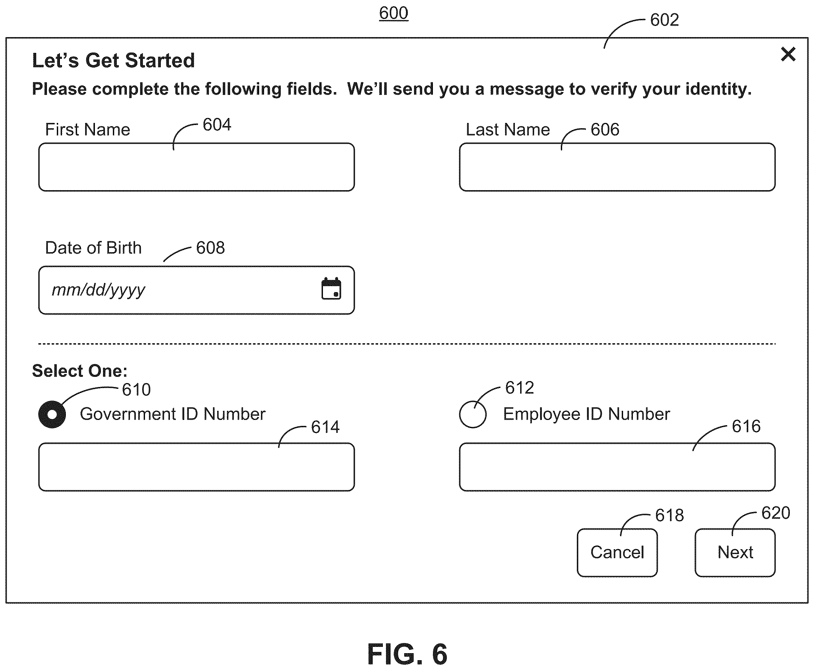

Referring now to FIG. 6, a graphical user interface for receiving data is shown. GUI 600 can be a dashboard configured to receive one or more personal identifiers. In some aspects, data processing system 142 provides GUI 600 for display on client device 106 responsive to an absence of an account in a directory (e.g., directory 163). GUI 600 can include window 602, where window 602 can contain first name field 604, last name field 606, date of birth field 608, government ID number button 610, employee ID number button 612, government ID number field 614, and employee ID number field 616, cancel button 618, and next button 620. First name field 604 can be configured to receive a profile first name, last name field 606 can be configured to receive a profile last name, and date of birth field 608 can be configured to receive a profile date of birth. Further, government ID number field 614 can be configured to receive text input responsive to selection of government ID number button 610 and employee ID number field 616 can be configured to receive text input responsive to selection of employee ID number button 612. Data processing system 142 can cause client device 106 to exit GUI 600 responsive to selection of cancel button 618. Client device 106 can navigate to another GUI (e.g., GUI 900) responsive to receipt of text in one or more text fields of GUI 600 and selection of next button 620. In some aspects, data processing system 142 can verify that the information included in the text fields of GUI 600 is true.

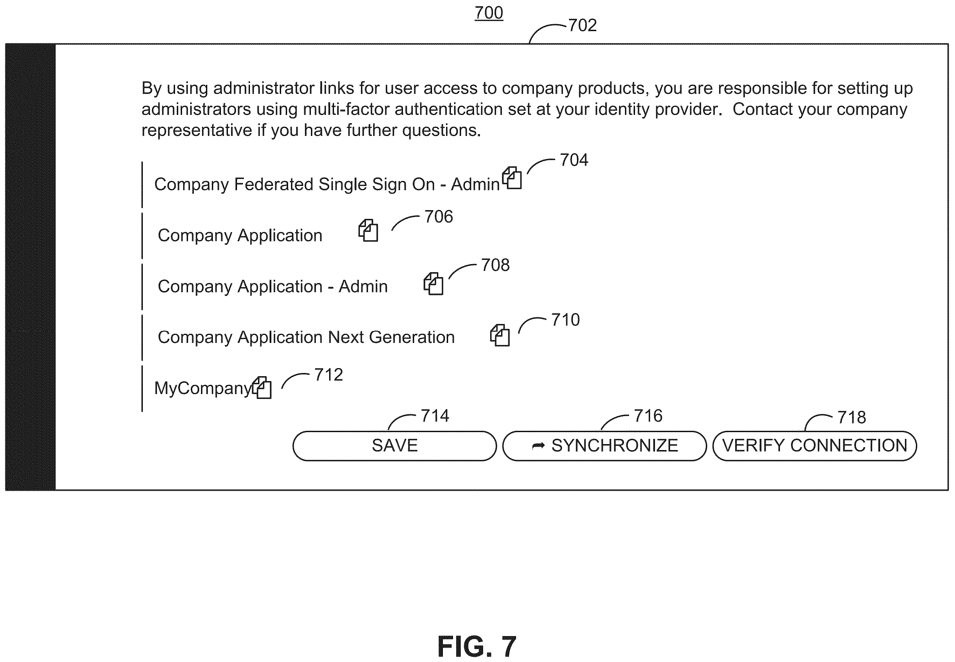

Referring now to FIG. 7, a GUI for performing handshake setups is shown. GUI 700 can include window 702, where window 702 can include links 704-712. Links 704-712 can correspond to web destination links. Links 704 and 708 can be administrator links corresponding to a web first application and a second web application respectively. Links 706, 710, and 712 can be user links corresponding to the second web application, a third web application, and a fourth web application respectively. Further, window 702 can contain save button 714, synchronize button 716, and verify connection button 718. In some aspects, data processing system can initiate a handshake setup responsive to selection of verify connection button 718.

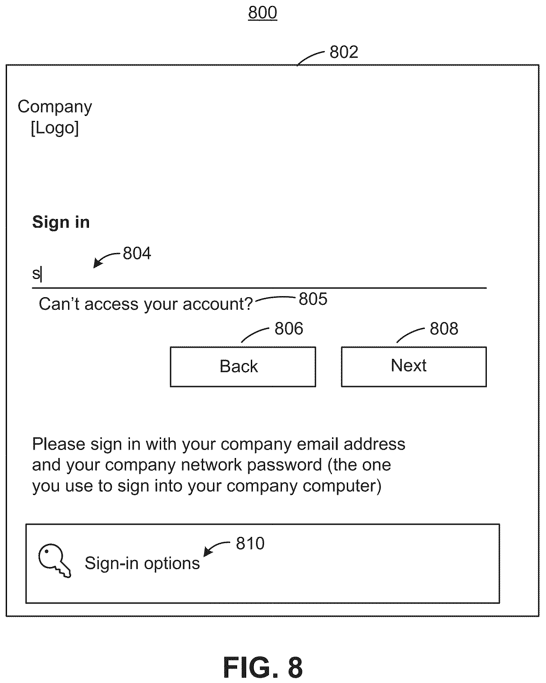

Referring now to FIG. 8, a GUI for receiving login credentials is shown. In some aspects, GUI 800 can receive login credentials corresponding to an identity provider. GUI 800 can include window 802, where window 802 can contain text field 804 for receiving one or more login credentials. Further, window 802 can contain back button 806 and next button 808. Data processing system 142 can cause client device 106 to navigate back to GUI 700 responsive to selection of back button 806. Data processing system 142 can cause client device 106 to navigate to another GUI responsive to receipt of one or more login credentials and selection of next button 808. Additionally, window 802 can contain sign-in options link 810. Selection of sign-in options link 810 can cause GUI 800 to display one or more alternative sign-in options, such as one-time passwords, biometric authentication, etc. In some aspects, data processing system 142 can cause client device 106 to navigate to GUI 600 responsive to selecting account link 805. Account link 805 can be a link that requires selection when a profile is unable to log in with the provided login credentials.

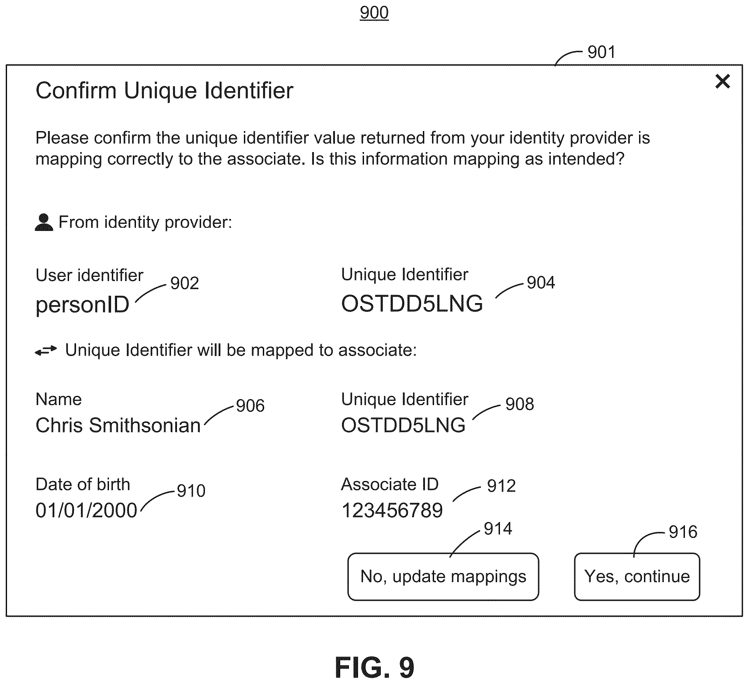

Referring now to FIG. 9, a GUI for confirming a unique identifier is shown. GUI 900 can be a confirmation page configured to confirm a proposed mapping between one or more unique identifiers and one or more personal identifiers. GUI 900 can include window 901, where window 901 can contain user identifier field 902, first unique identifier field 904, profile name field 906, second unique identifier field 908, profile date of birth field 910, and profile associate ID field 912. Further, window 901 can include update mappings button 914 and continue button 916. Data processing system 142 can cause client device 106 to navigate to GUI 1000 responsive to selection of update mappings button 914. Data processing system 142 can create a federated account responsive to selection of continue button 916.

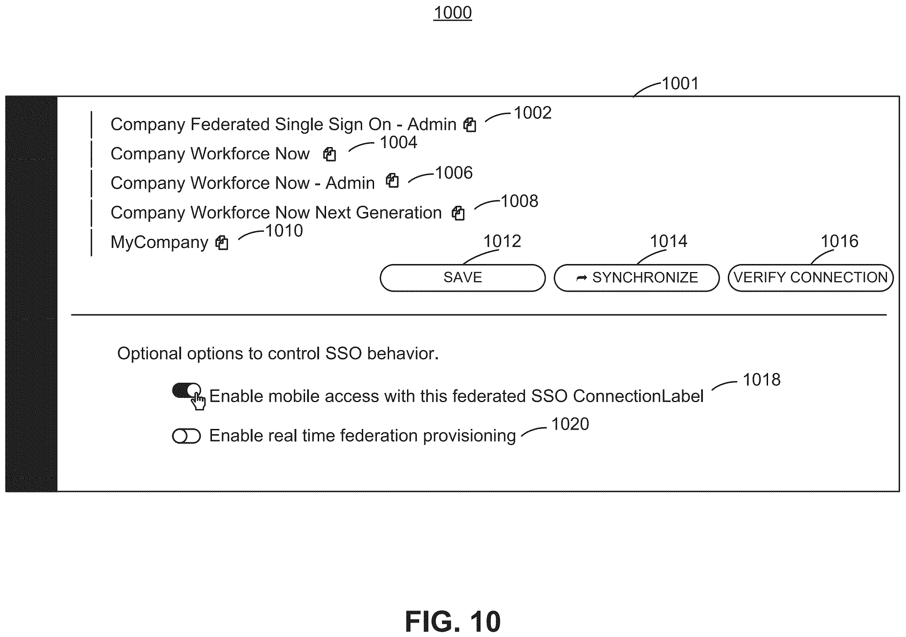

Referring now to FIG. 10, a GUI for performing handshake setups is shown. GUI 1000 can include window 1001, where window 1001 can include links 1002-1010. Links 1002-1010 can correspond to web destination links. Links 1002 and 1006 can be administrator links corresponding to a web first application and a second web application, respectively. Links 1004, 1008, and 1010 can be user links corresponding to the second web application, a third web application, and a fourth web application, respectively. Further, window 1001 can contain save button 1012, synchronize button 1014, and verify connection button 1016. In some aspects, data processing system can initiate a handshake setup, responsive to selection of verify connection button 1016. Additionally, window 1001 can include first slider 1018 and second slider 1020, where first slider 1018 and second slider 1020 can control SSO behavior. Selection of first slider 1018 can correspond to mobile access with federated SSO, and selection of second slider 1020 can correspond to real time federation provisioning.

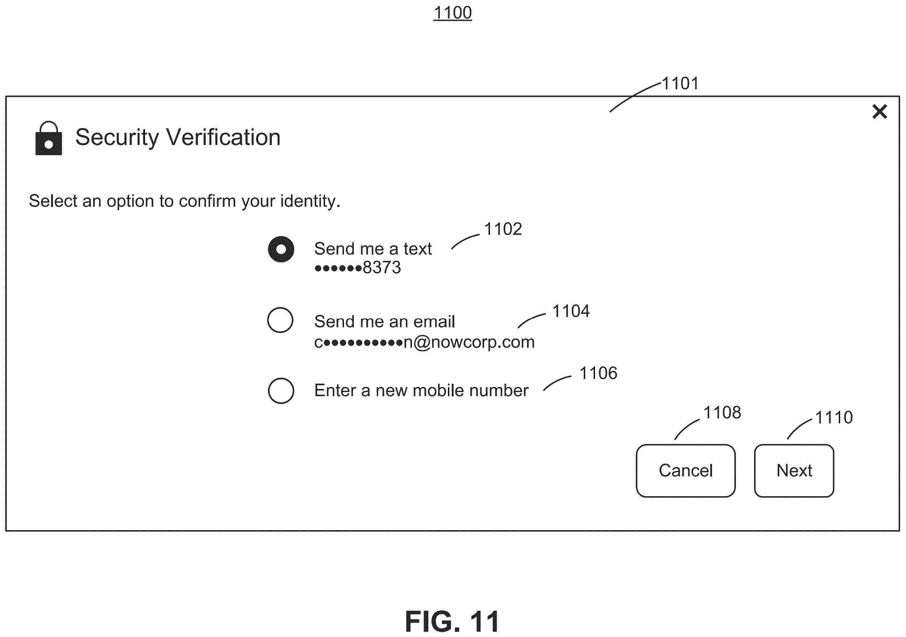

Referring now to FIG. 11, a GUI for verification is shown. GUI 1100 can include window 1101, where window 1101 can contain text verification option 1102, email verification option 1104, and new mobile number option 1106. Further, window 1101 can include cancel button 1108 and next button 1110. Data processing system 142 can cause client device 106 to exit GUI 1100 responsive to selection of cancel button 1108. Data processing system 142 can transmit a verification challenge corresponding to one of verification options 1102-1106 responsive to selection of next button 1110.

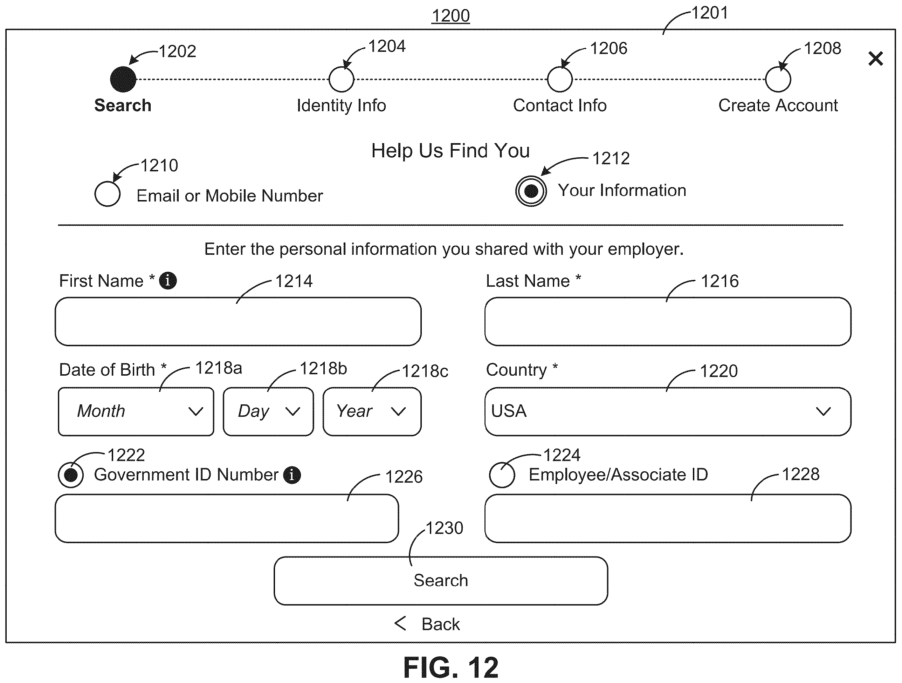

Referring now to FIG. 12, a GUI for receiving one or more personal identifiers is shown. GUI 1200 can include window 1201. Window 1201 can contain search phase indicator 1202, identity info indicator 1204, contact info indicator 1206, and create account indicator 1208. Window 1201 can also contain verification option 1210. Verification option 1210 can correspond to email or mobile number verification. In some aspects, selection of verification option 1210 can adjust elements of GUI 1200 such that GUI is configured to accept one or more text fields corresponding to verification option 1210. Further, window 1201 can also contain profile information option 1212. Selection of profile information option 1212 can cause GUI 1200 to display first name field 1214, last name field 1216, date of birth fields 1218a-1218c, country field 1220, government ID number button 1222, employee/associate ID number button 1224, government ID number field 1226, and employee/associate ID number field 1228, and search button 1230. First name field 1214 can be configured to receive a profile first name, last name field 1216 can be configured to receive a profile last name, and date of birth fields 1218a-1218c can be configured to receive a profile date of birth. Further, government ID number field 1226 can be configured to receive text input responsive to selection of government ID number button 1222 and employee/associate ID number field 1228 can be configured to receive text input responsive to selection of employee/associate ID number button 1224. Data processing system 142 can search for an account corresponding to a profile responsive to receipt of text in one or more of the text fields of GUI 1200.

The foregoing examples have been provided merely for the purpose of explanation and are in no way to be construed as limiting the technical solutions described herein. While aspects of the technical solutions described herein have been described with reference to an exemplary embodiment, it is understood that the words which have been used herein are words of description and illustration, rather than words of limitation. Changes can be made, within the purview of the appended claims, as presently stated and as amended, without departing from the scope and spirit of the technical solutions described herein in their aspects. Although aspects of the technical solutions described herein have been described herein with reference to particular means, materials, and embodiments, the technical solutions described herein are not intended to be limited to the particulars described herein; rather, the technical solutions described herein extends to all functionally equivalent structures, methods, and uses, such as are within the scope of the appended claims.

The subject matter and the operations described in this specification can be implemented in digital electronic circuitry, or in computer software, firmware, or hardware, including the structures described in this specification and their structural equivalents, or in combinations of one or more of them. The subject matter described in this specification can be implemented as one or more computer programs, e.g., one or more circuits of computer program instructions, encoded on one or more computer storage media for execution by, or to control the operation of, data processing apparatuses. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. While a computer storage medium is not a propagated signal, a computer storage medium can be a source or destination of computer program instructions encoded in an artificially generated propagated signal. The computer storage medium can also be, or be included in, one or more separate components or media (e.g., multiple CDs, disks, or other storage devices include cloud storage). The operations described in this specification can be implemented as operations performed by a data processing apparatus on data stored on one or more computer-readable storage devices or received from other sources.

The terms "computing device", "component" or "data processing apparatus" or the like encompass various apparatuses, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, app, script, or code) can be written in any form of programming language, including compiled or interpreted languages, declarative or procedural languages, and can be deployed in any form, including as a stand-alone program or as a module, component, subroutine, object, or other unit suitable for use in a computing environment. A computer program can correspond to a file in a file system. A computer program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit). Devices suitable for storing computer program instructions and data can include non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The subject matter described herein can be implemented in a computing system that includes a back end component, e.g., as a data server, or that includes a middleware component, e.g., an application server, or that includes a front end component, e.g., a client computer having a graphical user interface or a web browser through which a user can interact with an implementation of the subject matter described in this specification, or a combination of one or more such back end, middleware, or front end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, such operations are not required to be performed in the particular order shown or in sequential order, and all illustrated operations are not required to be performed. Actions described herein can be performed in a different order.

Having now described some illustrative implementations, it is apparent that the foregoing is illustrative and not limiting, having been presented by way of example. In particular, although many of the examples presented herein involve specific combinations of method operations or acts or system elements, those operations, acts and those elements can be combined in other ways to accomplish the same objectives. Acts, elements and features discussed in connection with one implementation are not intended to be excluded from a similar role in other implementations or implementations.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may or can also embrace implementations including a plurality of these elements, and any references in plural to any implementation or element or act herein may also embrace implementations including only a single element. References in the singular or plural form are not intended to limit the presently described systems or methods, their components, acts, or elements to single or plural configurations. References to any act or element being based on any information, act or element can include implementations where the act or element is based at least in part on any information, act, or element.

Any implementation described herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations described herein.

References to "or" can be construed as inclusive so that any terms described using "or" can indicate any of a single, more than one, and all of the described terms. References to at least one of a conjunctive list of terms can be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Modifications of described elements and acts such as substitutions, changes and omissions can be made in the design, operating conditions and arrangement of the described elements and operations without departing from the scope of the technical solutions described herein.

## Claims

1. A system, comprising:
one or more processors, coupled with memory, to:
receive, from a client device, a request to access a target application, the request comprising at least one unique identifier corresponding to a profile;
determine, responsive to receipt of the request, an absence of an account from a directory based on the at least one unique identifier;
request, via the client device responsive to determination of the absence, one or more personal identifiers;
verify, responsive to receipt of the one or more personal identifiers, that the one or more personal identifiers correspond to the profile;
generate, responsive to receipt of the one or more personal identifiers, the account in the directory with a link that maps the at least one unique identifier to the one or more personal identifiers; and
cause, responsive to generation of the account in the directory, the target application to execute using the generated account.

2. The system of claim 1, the one or more processors to:
verify that the one or more personal identifiers correspond to the profile based on a comparison of the one or more personal identifiers to profile data stored in a service provider database.

3. The system of claim 1 or 2, the one or more processors to:
receive, via the client device, a second request to access the target application;
determine a presence of the account in the directory based on the at least one unique identifier; and
cause, responsive to the presence of the account in the directory, the target application to execute using the account.

4. The system of any preceding claim, the one or more processors to:
connect, prior to receipt of the request, to a client computing system configured to:
receive, one or more client portal login credentials corresponding to the profile;
authenticate, responsive to receipt of the one or more client portal login credentials, the profile; and
provide, responsive to authentication of the profile, a client portal; and/or
the one or more processors to:
connect to a provisioning application programming interface (API), the provisioning API configured to perform one or more backend operations that facilitate generation of the account.

5. The system of any preceding claim, the one or more processors to:
connect, preceding receipt of the request, to a digital identity computing system configured to facilitate profile authentication.

6. The system of claim 5, wherein the digital identity computing system is configured to:
receive one or more login credentials corresponding to the digital identity computing system;
verify, responsive to receipt of the one or more personal identifiers, the one or more login credentials by comparing the one or more login credentials to a digital identity computing system database; and
provide, responsive to verification of the one or more login credentials, the at least one unique identifier.

7. The system of claim 5 or 6, the one or more processors to:
provide, via the client device, a linking confirmation confirming the link between the at least one unique identifier and the one or more personal identifiers;
receive, via the client device, one or more verification challenge solutions; and
transmit, responsive to verification of the profile, a verification signal to the digital identity computing system;
and/or the system wherein to determine an absence of the account from the directory based on the at least one unique identifier, the one or more processors further:
determine that the at least one unique identifier is not linked to the account.

8. The system of any preceding claim, wherein the at least one unique identifier is embedded in a cookie or token and/or
wherein the account corresponds to a plurality of target applications and/or
wherein the directory is a lightweight directory access protocol (LDAP).

9. A method for provisioning profiles, comprising:
receiving, by one or more processors from a client device, a request to access a target application, the request comprising at least one unique identifier corresponding to a profile;
determining, by the one or more processors responsive to receiving the request, an absence of an account from a directory based on the at least one unique identifier;
requesting, by the one or more processors via the client device responsive to determining an absence, one or more personal identifiers;
verifying, by the one or more processors responsive to receiving the one or more personal identifiers, that the one or more personal identifiers correspond to the profile;
generating, by the one or more processors responsive to receiving the one or more personal identifiers, the account in the directory with a link that maps the at least one unique identifier to the one or more personal identifiers; and
causing, by the one or more processors responsive to generating the account in the directory, the target application to execute using the generated account.

10. The method of claim 9, wherein verifying that the one or more personal identifiers correspond to the profile, comprises:
comparing, by the one or more processors, the one or more personal identifiers to profile data stored in a service provider database.

11. The method of claim 9 or 10, further comprising:
receiving, by the one or more processors via the client device, a second request to access the target application; and
determining, by the one or more processors, a presence of the account in the directory based on the at least one unique identifier; and
causing, responsive to the presence of the account in the directory, the target application to execute using the account.

12. The method of any of claims 9 to 11, further comprising:
connecting, by the one or more processors preceding receipt of the request, to a client computing system configured to:
receive one or more client portal login credentials corresponding to the profile;
authenticate, responsive to receipt of the one or more client portal login credentials, the profile; and
provide, responsive to authentication of the profile, a client portal.

13. The method of any of claims 9 to 12, further comprising:
connecting, by the one or more processors, to a provisioning application programming interface (API), the provisioning API configured to perform one or more backend operations that facilitate generation of the account.

14. The method of any of claims 9 to 13, further comprising:
connecting, by the one or more processors preceding receiving the request, to a digital identity computing system configured to facilitate profile authentication; and optionally wherein the digital identity computing system is configured to:
receive one or more login credentials corresponding to the digital identity computing system;
verify, responsive to receipt the one or more personal identifiers, the one or more login credentials by comparing the one or more login credentials to a digital identity computing system database; and
provide, responsive to verification the one or more login credentials, the at least one unique identifier.

15. A non-transitory computer-readable media having instructions stored thereon that, when executed by one or more processors, cause the one or more processors to carry out the method of any of claims 9 to 14.
